# EUROPEAN PATENT APPLICATION

(11) **EP 4 483 998 A1**
(43) Date of publication of application: **01.01.2025**
(21) Application number: 24182432.5
(22) Date of filing: 14.06.2024
(51) Int. Cl.: B01J 6/00, B01J 19/00, C01B 3/24, C10B 1/02, C10G 9/00

(54) **REACTOR AND RELATED PROCESS FOR TREATMENT, FOR EXAMPLE FOR PYROLYTIC TREATMENT, OF ORGANIC MATERIAL**

(30) Priority: 29.06.2023 US 202363524061 P; 28.07.2023 IT 202300016038
(71) Applicant: BioForceTech Corporation, South San Francisco, CA 94080 (US)
(72) Inventor: Presezzi, Dario, South San Francisco, CA 94080 (US); Thieme, Diego, I-20873 Cavenago di Brianza (MB) (IT); Scibilia, Andrea, I-20855 Peregallo di Lesmo (MB) (IT); Pessina, Stefano, Palo Alto, CA 94303 (US)
(74) Representative: PGA S.p.A., Milano, Succursale di Lugano

(57) **Abstract**

Reactor for treatment of organic material comprising a main channel (31) defining a treatment chamber (2) of the organic material comprising an inlet (3) and an outlet (4), a main conveyor (17) operating in the treatment chamber (2) and configured for moving the organic material under treatment from the inlet (3) to the outlet (4) along a predetermined treatment path within the main channel (31), a heater active on the main channel (31); the reactor also has a gas branch manifold (7) having a proximal portion (7a) connected to the main channel (31) at a gas outlet opening (8) present on the main channel (31) and spaced apart from the inlet (3) and from the outlet (4) of the main channel (31), and a distal portion (7b) spaced apart from the gas outlet opening (8) and having a gas discharge orifice (10). A plant and a process using the above reactor are also described.

## Description

### FIELD OF THE INVENTION

The object of the present invention is an apparatus for combustion for synthetic gases deriving from the treatment of organic material.

The present invention also concerns a plant and a process for treatment of organic material.

The invention may find advantageous application in the management and use of civil and industrial sewage sludges from agricultural waste, from waste management systems, for example of civil origin, or from energy production systems.

### BACKGROUND ART

There are known methods and related apparatuses for the treatment of organic material, for example sludges from waste water, by the application of heat. Known methods allow the production of synthetic gases usable as combustibles and of carbon residues, which may be further refined and used for making products or materials of various type.

Known apparatuses for the treatment of organic material has a treatment chamber or reactor where the organic material, heated at temperatures between 300°C and 800°C, generates synthetic gases and dusty residues that may be sucked by the treatment chamber and used as combustibles for the production of energy.

Although the above-described apparatus allows the combustion of synthetic gases generated by the treatment of organic material, the Applicant has found that these solutions have limitations and drawbacks.

Firstly, in known apparatuses, the synthetic gases produced usually contain a relatively high amount of dust particles that certainly reduce the quality of the gas and may cause clogging and scaling.

Furthermore, in known apparatuses, due to a non-optimal temperature control of the synthetic gas, this gas may partially condense into oils and tars if its temperature drops below a predetermined threshold. The formation of oils and tars is practically certain if the initially higher temperature, decreases and falls below a critical point (usually around 400°C), thus preventing an efficient operation of the apparatus.

### OBJECT OF THE INVENTION

A general object of the invention is therefore to solve at least one of the drawbacks and/or limitations of the previous solutions.

A first object of the present invention is to provide an apparatus and a process for the treatment of organic material for the efficient production of synthetic gases and/or for the generation of carbonaceous materials usable in various technological fields.

It is also an auxiliary object to provide a solution that limits the formation and the transport of mixtures of synthetic gases with excessive dusty residues.

Another auxiliary object is to provide an apparatus that limits the formation of scaling and the accumulation of dusty residues.

It is also an auxiliary object to design a solution that minimizes or excludes the formation of oils and tars deriving from the condensation of the synthetic gas.

Another auxiliary object is to provide a solution suitable for treating organic material with a reduced energy consumption.

A further auxiliary object is to provide a solution with an improved operational reliability that reduces the service costs of its components, such as for example the reactor and/or the combustion chamber, by reducing the number of maintenance operations required.

These objects and others, which will be more apparent from the following description, are substantially achieved by an apparatus and a process for the combustion for synthetic gases deriving from the treatment of organic material according to one or more of the accompanying claims and/or the following aspects.

### SUMMARY

Aspects of the invention are described below.

In a 1^{st} aspect is provided a reactor for the treatment, for example for the pyrolytic treatment, of organic material, said reactor comprising:
- a main channel (31) defining a treatment chamber (2) of the organic material comprising an inlet (3) for receiving organic material to be treated and an outlet (4) in communication with the inlet (3) and destined to unload treated material outside the treatment chamber,
- a main conveyor (17) operating in the treatment chamber (2) and configured for moving the organic material under treatment from the inlet (3) to the outlet (4) along a predetermined treatment path inside the main channel (31),
- at least a heater active on the main channel (31),
- a gas branch manifold (7) having:
   ∘ a proximal portion (7a) connected to the main channel (31) at a gas outlet opening (8) present on the main channel (31) and spaced apart from the inlet (3) and from the outlet (4) of the main channel (31),
   ∘ a distal portion (7b) spaced apart from the gas outlet opening (8) and having a gas discharge orifice (10).

In a 2^{nd} aspect according to the preceding aspect the inlet (3) and the outlet (4) of the main channel are arranged at opposing ends (31a, 31b) of the main channel itself.

In a 3^{rd} aspect according to any one of the preceding aspects the gas outlet opening (8) is closer to the outlet (4) of the main channel (31) than the inlet (3) of the main channel itself (31).

In a 4^{th} aspect according to any one of the preceding aspects the gas outlet opening (8) is positioned at a terminal section of the main channel (31) of extension equal to no more than 1/3 of an overall extension of the main channel itself (31).

In a 5^{th} aspect according to any one of the preceding aspects the gas branch manifold (7) comprises an expansion section (7c) extending between the proximal portion (7a) and the distal one (7b).

In a 6^{th} aspect according to the preceding aspect the expansion section (7c) of the gas branch manifold (7) extends in radial direction with respect to a lateral surface of the main channel (31).

In a 7^{th} aspect according to any one of the preceding aspects the gas discharge orifice (10) has a gas passage area smaller than a gas passage area of the gas outlet opening (8) of the main channel.

In an 8^{th} aspect according to the preceding aspect a ratio between the gas passage area of the gas outlet opening (8) of the main channel and the gas passage area of the gas discharge orifice (10) is comprised between 0.01 and 0.06, optionally comprised between 0.02 and 0.05.

In a 9^{th} aspect according to any one of the preceding aspects the gas outlet opening (8) and the proximal portion of the gas branch manifold (7) are located at an upper half of the main channel (31).

In a 10^{th} aspect according to any one of the preceding aspects from 5^{th} to 9^{th} the expansion section (7c) of the gas branch manifold (7) extends radially, optionally in vertical direction, from the gas outlet opening (8) positioning the distal portion (7b) of the gas branch manifold (7) at a maximum height (H) from the gas outlet opening (8).

In a 11^{th} aspect according to the preceding aspect the main channel (31) has a longitudinal development direction (A) and wherein said main channel also has, immediately upstream and/or immediately downstream of said gas outlet opening, a cross section with vertical dimension (D 1), measured transversely to the longitudinal development direction (A), smaller than the maximum height (H) of the gas branch manifold (7).

In a 12^{th} aspect according to the preceding aspect the ratio between the maximum height (H) of the gas branch manifold (7) and the vertical dimension (D1) of the main channel (31) is comprised between 1.2 and 2.5.

In a 13^{th} aspect according to any one of the preceding aspects the gas branch manifold (7) does not diverge moving away from the gas outlet opening (8).

In a 14^{th} aspect according to any one of the preceding aspects the gas branch manifold (7) has a constant cross section for the whole extension of the manifold.

In a 15^{th} aspect according to any one of the preceding aspects the gas branch manifold (7) has a tubular shape, even more optionally prismatic or cylindrical tubular shape.

In a 16^{th} aspect according to any one of the preceding aspects from 11^{th} to 15^{th} the gas outlet opening (8) is at a minimum distance (Dm) from the outlet of the main channel (31) having size greater than said vertical dimension (D1) of the main channel (31).

In a 17^{th} aspect according to the preceding aspect the ratio between said minimum distance (Dm) and a length (L) of the main channel (31), measured parallel to the longitudinal development direction (A) of the main conveyor (17), is comprised between 0.1 and 0.3.

In a 18^{th} aspect according to any one of the preceding aspects the gas outlet opening (8) has an elongated conformation parallel to theta longitudinal development direction (A) of the main channel (31).

In a 19^{th} aspect according to any one of the preceding aspects the ratio between a length of the gas outlet opening (8) and theta length (L) of the main channel (31) measured parallel to theta longitudinal development direction (A) of the main conveyor (17) is comprised between 0.1 and 0.5.

In a 20^{th} aspect according to any one of the preceding aspects the reactor comprises:
- a loading channel (12a) in communication with the inlet (3) of the main channel (31),
- a loading conveyor (15) which operates internally to the loading channel and is configured for moving the organic material towards the inlet (3) of the main channel (31).

In a 21^{st} aspect according to the preceding aspect the loading channel (12a) is sloped.

In a 22^{nd} aspect according to any one of the two preceding aspects the loading channel (12a) extends between a first end, at or in immediate proximity of the inlet (3) of the main channel (31), and a second end, located inferiorly to the first end.

In a 23^{rd} aspect according to any one of the three preceding aspects the loading channel (12a) is sloped with respect to a horizontal plane by an inner angle comprised between 5° and 60°, optionally comprised between 10° and 45°.

In a 24^{th} aspect according to any one of the two preceding aspects the first end (15a) of the loading channel (12a) is laterally engaged to the main channel (31).

In a 25^{th} aspect according to any one of the five preceding aspects the loading conveyor (15) is a screw or auger conveyor which operates in the loading channel (12a).

In a 26^{th} aspect according to any one of the six preceding aspects the loading channel (12a) comprises a radial inlet mouth (32a) defined in proximity of the second end of the loading channel itself.

In a 27^{th} aspect according to any one of the seven preceding aspects the reactor comprises a hopper (33) for the containment of the organic material to be treated, said hopper (33) comprising an unloading opening (34) for the movement by gravity of the organic material in the loading channel (12a), optionally through the inlet mouth (32a) of the loading channel (12a).

In a 28^{th} aspect according to the preceding aspect the reactor comprises an unloading channel (35) which connects the unloading opening (34) of the hopper (33) with the loading channel (12a), optionally with the inlet mouth (32a) of the loading channel (12a).

In a 29^{th} aspect according to any one of the preceding aspects the reactor comprises:
- an unloading channel (12b) in communication with the outlet (4) of the main channel (31),
- an unloading conveyor (16) which operates internally to the unloading channel and is configured for moving the organic material externally to the main channel (31).

In a 30^{th} aspect according to the preceding aspect the unloading channel (12b) is sloped.

In a 31^{st} aspect according to any one of the two preceding aspects the unloading channel (12b) extends between a first end at or in immediate proximity of the outlet (4) of the main channel (31), and a second end located upperly to the first end.

In a 32^{nd} aspect according to any one of the three preceding aspects the unloading channel (12b) is sloped with respect to a horizontal plane by an inner angle comprised between 5° and 60°, optionally comprised between 10° and 45°.

In a 33^{rd} aspect according to any one of the two preceding aspects the first end of the unloading channel (12b) is laterally engaged to the main channel (31).

In a 34^{th} aspect according to any one of the five preceding aspects the unloading conveyor (16) is a screw or auger conveyor which operates in the unloading channel (12b).

In a 35^{th} aspect according to any one of the six preceding aspects the unloading channel (12b) comprises a radial outlet mouth (32b) defined in proximity of the second end of the unloading channel itself.

In a 36^{th} aspect according to the 20^{th} and 29^{th} aspect the reactor comprises two motors (14a, 14b) respectively connected to the loading conveyor (15) and to the unloading conveyor (16) for allowing a respective movement thereof relative to the loading channel (12a) and to the unloading channel (12b).

In a 37^{th} aspect according to the preceding aspect the reactor comprises a control unit connected to said motors (14a, 14b) and configured for commanding the movement of the loading and unloading conveyors (15, 16) thereof as a function of a predetermined speed profile.

In a 38^{th} aspect according to any one of the preceding aspects the main conveyor (17) has:
- a shaft (18) movable by rotation about an axis parallel to a/the prevalent development longitudinal direction (A) of the main channel (31),
- one or more helical rotors (19) radially emerging from the shaft (18) and interconnected to each other to define a coil,
wherein at least one of said one or more helical rotors (19) is a hollow rotor (20) having:
- a perimeter edge (21) extending as a coil around the shaft (18),
- a cavity (22) defining a passage radially interposed between the shaft (18) of the main conveyor and the perimeter edge (21) of the hollow rotor (20).

In a 39^{th} aspect according to the preceding aspect each hollow rotor (20) has one or more transversal spokes (23) engaging respective sections of the perimeter edge (21) to the shaft (18).

In a 40^{th} aspect according to the preceding aspect the spokes (23) of a respective hollow rotor (20) are angularly offset to each other, optionally by an angle comprised between 70° and 110°, even more optionally comprised between 80° and 100°.

In a 41^{st} aspect according to any one of the three preceding aspects at least one of said one or more helical rotors (19) is a solid rotor (24) devoid of cavities radially extending from the shaft to an inner surface of the main channel (31).

In a 42^{nd} aspect according to the preceding aspect at least one of said one or more hollow rotors (20) are consecutively joined to a solid rotor (24).

In a 43^{rd} aspect according to any one of the two preceding aspects at least a solid rotor (24) of the main conveyor (17), optionally having one or more coils, operates in proximity of the inlet (3) of the treatment chamber (2).

In a 44^{th} aspect according to any one of the three preceding aspects at least a solid rotor (24) of the main conveyor (17), optionally having one or more coils, operates in proximity of the outlet (4) of the treatment chamber (2).

In a 45^{th} aspect according to any one of the preceding aspects from the 38^{th} to the 44^{th} the main conveyor (17) comprises one or more wings (25) transversely emerging from the shaft (18) and spaced from the helical rotors (19), configured for terminally contacting an inner surface of the main channel (31).

In a 46^{th} aspect according to the preceding aspect the wings (25) are spaced apart to each other along the shaft (18).

In a 47^{th} aspect according to any one of the two preceding aspects each wing (25) is angularly offset from an adjacent wing, optionally by an angle comprised between 70° and 200°.

In a 48^{th} aspect according to any one of the three preceding aspects each wing (25) has:
- a rod (25a) engaged transversely to the shaft (18) of the main conveyor (17),
- a terminal body (25b) engaged to the rod (25a) from the opposite side to the shaft (18).

In a 49^{th} aspect according to the preceding aspect the terminal body (25b) of the wing (25) has a platelike conformation.

In a 50^{th} aspect according to any one of the two preceding aspects the terminal body (25b) has an elongated conformation transversely to the rod (25a) of the wing (25), defining, in cooperation with the rod (25a), a substantially "T" or "L" shape.

In a 51^{st} aspect according to any one of the three preceding aspects the terminal body (25b) of the wing (25) has at least a contact surface sloped with respect to a horizontal plane passing by the shaft (18) of the main conveyor (17).

In a 52^{nd} aspect according to any one of the preceding aspects the main conveyor (17) comprises:
- at least a first sector comprising a plurality of helical rotors (19) interconnected to each other,
- at least a second sector, adjacent to the first sector and comprising a plurality of wings (25).

In a 53^{rd} aspect according to the preceding aspect the shaft (18) of the main conveyor (17) extends in length between the inlet (3) and the outlet (4) of the treatment chamber (2), wherein the main conveyor (17), for a preponderant part of the length of the shaft (18), has a plurality of first sectors interspersed by second sectors.

In a 54^{th} aspect according to any one of the two preceding aspects the first and second sectors cover at least the 70% of the length of the shaft (18).

In a 55^{th} aspect according to any one of the three preceding aspects the main conveyor (17) has respective first sectors in proximity of the inlet (3) and of the outlet (4) of the treatment chamber (2), said first sectors comprising solid rotors and/or hollow rotors (19).

In a 56^{th} aspect according to any one of the four preceding aspects a central section of the main conveyor (17) has one or more first sectors comprising exclusively hollow rotors (19).

In a 57^{th} aspect according to any one of the preceding aspects the reactor comprises a motor (26) connected to the main conveyor (17) for allowing a rotation thereof with respect to the treatment chamber (2).

In a 58^{th} aspect according to the preceding aspect the reactor comprises a control unit (50) connected with the motor and configured for commanding the movement of the main conveyor (17) as a function of a predetermined speed profile, optionally at constant angular speed.

In a 59^{th} aspect according to any one of the preceding aspects the heater comprises:
- a fluid heater (5) active on a first section (2a) of the main channel (31),
- an electrical heater (6) active on a second section (2b) of the main channel (31) interposed between the first section (2a) and the outlet (4) of the main channel (31).

In a 60^{th} aspect according to the preceding aspect the first and the second section (2a, 2b) cover substantially all the longitudinal extension of the main channel (31).

In a 61^{st} aspect according to any one of the two preceding aspects the fluid heater (5) comprises a fluid supply line (5a) active on the first section (2a) of the main channel (31), configured for being placed in fluid communication with a hot fluid source, the supply line developing around the first section (2a) for transferring heat to the main channel (31).

In a 62^{nd} aspect according to any one of the three preceding aspects the first section (2a) of the treatment chamber (2) extends in length for a preponderant part of the main channel (31) parallel to a/the longitudinal development direction (A) of the main channel (31).

In a 63^{rd} aspect according to the preceding aspect said preponderant part covers more than the 50% of an overall extension of the main channel (31).

In a 64^{th} aspect according to any one of the preceding aspects the reactor comprises a temperature sensor (28) active in the treatment chamber (2) and configured for generating one or more signals representative of a temperature inside the treatment chamber (2).

In a 65^{th} aspect according to the preceding aspect theta control unit (50) is connected to the temperature sensor (28) and configured for:
- receiving one or more temperature signals generated by said temperature sensor (28),
- determining one or more measured values of temperature as a function of the signals received from the temperature sensor (28),
- comparing each measured values of temperature with a threshold value of temperature, optionally comprised between 280°C and 800°C, even more optionally comprised between 320°C and 680°C.

In a 66^{th} aspect according to the preceding aspect the control unit (50) is connected to the electrical heater (6) active on the second section (2b) of the treatment chamber (2) and is configured for commanding the electrical heater (6) as a function of said one or more measured values of temperature, optionally if said measured values of temperature are lower than the threshold value of temperature.

In a 67^{th} aspect according to any one of the preceding aspects the reactor comprises a pressure sensor (29) active in the treatment chamber (2) and configured for generating a signal representative of a relative pressure inside the treatment chamber (2).

In a 68^{th} aspect is provided a process for the treatment of organic material through a reactor according to any one of the preceding aspects.

In a 69^{th} aspect according to the preceding aspect the process comprises the steps of:
- supplying organic material inside the treatment chamber (2) of the reactor,
- moving organic material through the main conveyor (17),
- heating the organic material through the heater,
- withdrawing, through the gas branch manifold (7), gases, for example synthetic gas, generated by the heating of the organic material in the treatment chamber (2).

In a 70^{th} aspect according to the preceding aspect the step of withdrawing gas from the treatment chamber (2) comprises a step of adjusting a pressure in the treatment chamber (2) sucking gas from the gas branch manifold (7) so that the pressure inside the treatment chamber is lower than the environmental pressure, reigning outside the plant, by a quantity comprised in a reference range between 10 Pa and 250 Pa, optionally between 20 Pa and 100 Pa.

In a 71^{st} aspect according to the preceding aspect the step of adjusting the pressure in the treatment chamber (2) involves moving gas in the gas branch manifold (7), optionally in the expansion section (7c), at a speed comprised between 0.05m/s and 0.8m/s, optionally comprised between 0.1 m/s and 0.4m/s.

In a 72^{nd} aspect according to any one of the three preceding aspects the step of supplying organic material in the treatment chamber (2) comprises the steps of:
- unloading organic material, optionally in granular or dust form, on the loading conveyor (15),
- moving, through the loading conveyor (15), the organic material at the inlet (3) of the treatment chamber (2).

In a 73^{rd} aspect according to the preceding aspect the step of moving organic material comprises a step of controlling a speed of movement of the loading conveyor (15) along the operative section.

In a 74^{th} aspect according to any one of the five preceding aspects the step of heating the organic material comprises a sub-step of adjusting a temperature inside the treatment chamber (2) in a range comprised between 250°C and 800°C, even more optionally comprised between 280°C and 600°C.

In a 75^{th} aspect according to any one of the six preceding aspects the step of heating the organic material is performed simultaneously to the step of moving organic material through the main conveyor (17).

In a 76^{th} aspect according to any one of the seven preceding aspects the step of heating the organic material is performed through the fluid heater (5) and the electrical heater (6).

In a 77^{th} aspect according to any one of the eight preceding aspects the process comprises the steps of:
- withdrawing treated organic material from the treatment chamber (2), and subsequently
- storing treated organic material outside the treatment chamber (2).

In a 78^{th} aspect according to the preceding aspect the step of withdrawing treated organic material from the treatment chamber (2) comprises a step of moving, through the unloading conveyor (16), the treated organic material outside the treatment chamber (2).

In a 79^{th} aspect according to the preceding aspect said step of moving treated organic material comprises a step of controlling a movement speed of the unloading conveyor (16) along the operative section.

In an 80^{th} aspect it is provided an apparatus for the combustion of synthetic gases deriving from the treatment of organic material, for example through pyrolysis, said apparatus comprising:
- a burner (75);
- a combustion chamber (62) cooperating with the burner (75) and having an outlet (64) destined to eject exhaust gases,
- a fluid supply circuit (65) configured for supplying a comburent gas to the burner (75),
wherein the fluid supply circuit (65) is at least partially outside the combustion chamber (62) and has one or more channels (66) in contact with an outer surface (62a) of the combustion chamber (62) for exchanging heat with the combustion chamber itself.

In an 81^{st} aspect according to the preceding aspect the burner (75) has:
- a combustible access (77) configured for receiving a combustible gas,
- a comburent access (76) configured for receiving the comburent gas from the fluid supply circuit (65),
- a mixing chamber (78) in communication with the comburent access (76) and the combustible access (77) for mixing said gases in inlet through said accesses (76, 77),
- an activation device (72) operating in the mixing chamber (78) and configured for triggering the combustion of said gases.

In an 82^{nd} aspect according to any one of the two preceding aspects the fluid supply circuit (65) has a gas access (67) for receiving the comburent gas, optionally room air, from an environment outside the combustion chamber (62) and a gas outlet (68) in communication with the combustion chamber (62) or with the comburent access (76) of the burner (75).

In an aspect 82bis according to any one of the preceding aspects of apparatus the burner (75) is placed upstream or internally to the combustion chamber.

In an 83^{rd} aspect according to any one of the three preceding aspects said one or more channels (66) of the fluid supply circuit (65) are formed from subsequent sections of a single continuous channel or from distinct channels in communication to each other.

In an 84^{th} aspect according to any one of the four preceding aspects said channels (66) are overlapped to a preponderant part, optionally at least the 70%, of the outer surface (62a) of the combustion chamber (62).

In an 85^{th} aspect according to any one of the five preceding aspects the combustion chamber (62) extends along a development direction (X), and wherein said one or more channels (66) of the fluid supply circuit (65) are arranged transversely to the development direction (X) of the combustion chamber (62).

In an 86^{th} aspect according to any one of the six preceding aspects said one or more channels (66) form at least a single continuous channel extending around the outer surface (62a) of the combustion chamber (62) along a helical trajectory.

In an 87^{th} aspect according to any one of the seven preceding aspects said one or more channels (66) form annular-shaped segments (66a), optionally with circular shape, extending around to the outer surface (62a) of the combustion chamber (62), wherein each of said segments (66a) is in communication with an adjacent channel (66).

In an 88^{th} aspect according to any one of the eight preceding aspects the combustion chamber (62) has a hollow tubular conformation, optionally tubular cylindrical or prismatic.

In an 89^{th} aspect according to any one of the preceding aspects from the 80^{th} to the 88^{th} the outer surface (62a) has a cylindrical shape with circular profile or polygonal profile.

In a 90^{th} aspect according to any one of the preceding aspects from the 80^{th} to the 89^{th} the combustion chamber (62) has a first and a second terminal wall (62', 62") which delimit longitudinally the combustion chamber itself.

In a 91^{st} aspect according to the preceding aspect the burner (75) is carried by the first terminal wall (62').

In a 92^{nd} aspect according to any one of the two preceding aspects the fluid supply circuit (65) contacts the outer surface (62a) from an area next to the second terminal wall (62") until an area next to the first terminal wall (62').

In a 93^{rd} aspect according to any one of the preceding aspects from the 80^{th} to the 92^{nd} the inlet (63) and the outlet (64) of the combustion chamber (62) are respectively defined on the first and the second terminal walls (62', 62").

In a 94^{th} aspect according to any one of the preceding aspects from the 80^{th} to the 93^{rd} the fluid supply circuit (65) comprises a sleeve (68) which wraps the combustion chamber (62) and is radially outside the outer surface (62a) of the combustion chamber (62) itself to form a gap for receiving said comburent gas.

In a 95^{th} aspect according to any one of the preceding aspects from the 80^{th} to the 94^{th} the fluid supply circuit (65) comprises one or more walls (69) arranged transversely to a/to the development direction (X) of the combustion chamber (62), wherein subsequent sections of the one or more separating walls (69) parallel to each other.

In a 96^{th} aspect according to the two preceding aspects said walls (69) extend radially, outside of the outer surface (62a) of the combustion chamber (62) and internally to the sleeve (68).

In a 97^{th} aspect according to any one of the three preceding aspects said one or more channels (66) are laterally delimited from subsequent sections of the one or more separating walls (69) and radially delimited by the sleeve (68).

In a 98^{th} aspect according to any one of the three preceding aspects said one or more walls (69) are interconnected to each other to define a single helical element extending around the outer surface (62a) of the combustion chamber (62) for a preponderant part, optionally for all of a length of the combustion chamber (62) measured parallel to the development direction (X).

In a 99^{th} aspect according to any one of the preceding aspects from the 94^{th} to the 98^{th} the apparatus comprises a case (70) radially outside the sleeve (68) that defines a gap between the sleeve (68) and an inner surface (70a) of the case (70).

In a 100^{th} aspect according to any one of the preceding aspects from the 80^{th} to the 99^{th} at least one of: the combustion chamber (62), the sleeve (68), said one or more walls (69) and the case (70), are made in metallic material, optionally steel, for example stainless steel.

In a 101^{st} aspect according to any one of the preceding aspects from the 80^{th} to the 100^{th} the combustion chamber (62), the sleeve (68) and/or the case (70) are devoid of coatings made in refractory or thermally insulating materials.

In a 102^{nd} aspect according to any one of the preceding aspects from the 80^{th} to the 101^{st} the burner (75) comprises an auxiliary access (88) in communication with the combustion chamber (62), optionally the mixing chamber (78), for receiving combustible gas and allowing an initial ignition of the apparatus.

In a 103^{rd} aspect according to any one of the preceding aspects from the 80^{th} to the 102^{nd} the fluid supply circuit (65) comprises a connection duct (74) which connects with the burner (75) a terminal part, adjacent to the burner itself, of the gap formed by said sleeve (68).

In a 104^{th} aspect it is provided a process for the combustion of synthetic gases deriving from the treatment of organic material, through an apparatus according to any one of the preceding aspects.

In a 105^{th} aspect according to the preceding aspect the process comprises the steps of:
- heating said comburent gas in the fluid supply circuit (65),
- supplying to the burner (75) the combustible gas, optionally synthetic gas, and the comburent gas heated in the fluid supply circuit (65).

In a 106^{th} aspect according to the preceding aspect the process comprises a step of activating the activation device (72) of the burner (75) for triggering the combustion between combustible gas and comburent gas.

In a 107^{th} aspect according to any one of the two preceding aspects the step of heating the comburent gas involves a gradual heating of the comburent gas after a progressive movement of the comburent gas itself in the fluid supply circuit (65) and toward the burner (75).

In a 108^{th} aspect according to any one of the three preceding aspects the step of heating said comburent gas in the fluid supply circuit (65) involves heating the comburent gas from a room temperature, optionally comprised between 5°C and 45°C, to a threshold temperature, optionally greater than 250°C, even more optionally comprised between 450°C and 650°C.

In a 109^{th} aspect according to the preceding aspect the step of supplying the comburent gas to the burner (75) comprises the sub-steps of:
- supplying comburent gas in said fluid supply circuit (65) along a helical or annular trajectory, and subsequently
- supplying, through the connection duct (74), said comburent gas in the burner (75).

In a 110^{th} aspect it is provided a plant for the treatment of organic material comprising an apparatus (60) according to any one of the preceding aspects from the 80^{th} to the 103^{rd}.

In a 111^{th} aspect according to the preceding aspect the plant comprises:
- a reactor (1) for the treatment, optionally for the pyrolytic treatment, of organic material and the generation of gas, wherein said reactor (1) comprises:
   ∘ a main channel (31) defining a treatment chamber (2) of the organic material comprising an inlet (3) for receiving organic material to be treated and an outlet (4) in communication with the inlet (3) and destined to unload treated material outside the treatment chamber,
   ∘ a main conveyor (17) operating in the treatment chamber (2) and configured for moving the organic material under treatment from the inlet to the outlet along a predetermined treatment path inside the main channel,
   ∘ at least a heater active on the main channel (31),
   ∘ a gas branch manifold (7) connected to the main channel (31) at a gas outlet opening (8) present on the main channel (31) and placed in fluid communication with the burner (75).

In a 112^{th} aspect according to the preceding aspect the gas branch manifold (7) has a gas discharge orifice (10), opposite to the gas outlet opening (8) and configured for supplying gas deriving from the main channel (31).

In a 113^{th} aspect according to the preceding aspect the gas discharge orifice (10) of the reactor (1) is in communication with the burner (75) of the apparatus (60).

In a 114^{th} aspect according to any one of the two preceding aspects the plant comprises a connection channel (81) which connects the gas discharge orifice (10) of the gas branch manifold (7) of the reactor (1) with the burner (75) of the apparatus (60), wherein said connection channel (81) is configured for supplying to the burner (75), gas coming from the treatment chamber (2) of the reactor (1).

In a 115^{th} aspect according to any one of the preceding aspects from the 110^{th} to the 114^{th} the plant comprises a comburent gas supply line (85) in communication with the fluid supply circuit (65) of the apparatus (60) for supplying gas in said one or more channels (66).

In a 116^{th} aspect according to the preceding aspect the plant comprises a gas movement device (84), for example a fan, active on the comburent gas supply line (85) for moving the comburent gas, for example air, coming from an environment outside the plant.

In a 117^{th} aspect according to any one of the preceding aspects from the 110^{th} to the 116^{th} the plant comprises an exhaust gas evacuation line (73) in communication with the outlet (64) of the combustion chamber (62) of the apparatus (60) and configured for ejecting an exhaust gas from the combustion chamber itself.

In a 118^{th} aspect according to the preceding aspect the plant comprises a suction device (120) connected to a terminal end of the exhaust gas evacuation line (73) opposite to the outlet (64) of the combustion chamber (62), configured for evacuating the exhaust gas in an environment outside the plant.

In a 119^{th} aspect according to any one of the preceding aspects from the 110^{th} to the 118^{th} the reactor comprises:
- a pressure sensor (29) active in the treatment chamber (2) and configured for generating a signal representative of a pressure inside the treatment chamber (2),
- a/said control unit (50) connected to the pressure sensor (29) and configured for:
   ∘ receiving one or more pressure signals generated by said pressure sensor (29),
   ∘ determining one or more measured values of pressure as a function of the signals received from the pressure sensor (29),
   ∘ verifying if said one or more of the measured values of pressure indicate that the pressure inside the treatment chamber is lower than the environmental pressure, reigning outside the plant, optionally lower by a quantity comprised in a reference range between 10 Pa and 250 Pa, optionally between 20 Pa and 100 Pa.

In a 120^{th} aspect according to any one of the preceding aspects from the 110^{th} to the 119^{th} the suction device (120) is active on the gas branch manifold (7) of the reactor.

In a 121^{st} aspect according to the two preceding aspects theta control unit (50) is connected to the suction device (120) and is configured for commanding the suction device itself as a function of said measured values of pressure received from the pressure sensor (29), so as to keep a status of depression in the treatment chamber with respect to the outer environment, optionally wherein the control unit is configured for controlling the suction of the suction device such that the pressure inside the treatment chamber is lower than the environmental pressure by a quantity comprised in a reference range between 10 Pa and 250 Pa, optionally between 20 Pa and 100 Pa. In a 122^{nd} aspect according to any one of the preceding aspects from the 110^{th} to the 121^{st} the reactor (1) comprises:
- a fluid heater (5) active on a first section (2a) of the main channel (31),
- an electrical heater (6) active on a second section (2b) of the main channel (31) interposed between the first section (2a) and the outlet (4) of the main channel (31).

In a 123^{rd} aspect according to the preceding aspect the fluid heater (5) comprises a fluid supply line active on the first section (2a) of the main channel (31) and extending around the first section (2a) for transferring heat to the main channel.

In a 124^{th} aspect according to any one of the two preceding aspects the plant comprises:
- a recirculation line (108) which has:
   ∘ a first branch (108a) connected to a terminal end of the radiating heater (5), optionally of the supply line of the radiating heater (5), of the reactor (1),
   ∘ a second branch (108b) connected to an initial end of the radiating heater (5), optionally of the supply line of the radiating heater (5), of the reactor (1),
- a recirculation pump (109) active on the recirculation line (108) for moving a fluid to be heated from the first to the second branch (108a, 108b) of the recirculation line itself.

In a 125^{th} aspect according to the preceding aspect the plant comprises at least a heat exchange unit (98) which has:
- a hot fluid chamber (98') in fluid communication with the exhaust gas evacuation line (73), configured for receiving said exhaust gas deriving from the apparatus (60) and conveying said exhaust gas toward the suction device (120) of the gas evacuation line itself,
- one or more cold fluid channels (98") located in the hot fluid chamber (98') and in fluid communication with the first and second branch (108a, 108b) of the recirculation circuit (108), wherein each cold fluid channel (98") is configured for receiving the fluid to be heated deriving from the first branch (108a) of the recirculation circuit (108) and supplying a heated fluid in the second branch (108b) of the recirculation circuit itself.

In a 126^{th} aspect according to the preceding aspect the hot fluid chamber (98') comprises:
- a hot fluid inlet (98a') connected to a section of the exhaust gas evacuation line (73) downstream of the outlet (64) of the combustion chamber (62),
- a hot fluid outlet (98b') connected to the suction device (120).

In a 127^{th} aspect according to any one of the two preceding aspects the plant comprises:
- at least a collection container (102) located inferiorly to the heat exchange unit (98),
- a loading cell (103) associated to the collection container (102) and configured for generating a signal representative of a weight of the collection container,
- at least a pressure sensor (104) associated to the heat exchange unit (98) and configured for generating a signal representative of a pressure inside the hot fluid chamber (98').

In a 128^{th} aspect according to the preceding aspect a/the control unit (50) is connected to the loading cell (103) and configured for:
- receiving one or more signals generated by said loading cell (103),
- determining one or more measured values of weight of the collection container (102) as a function of the signals received from the loading cell (103),
- comparing each measured values of weight of the collection container (102) with a threshold value of weight. In a 129^{th} aspect according to any one of the two preceding aspects a/the control unit (50) is connected to the pressure sensor (104) and configured for:
- receiving one or more signals generated by said pressure sensor (104),
- determining one or more measured values of pressure as a function of one or more signals received from the pressure sensor (104),
- comparing said one or more measured values of pressure with a predefined criterion for assessing the presence or not of a clogging condition.

In a 130^{th} aspect according to any one of the two preceding aspects a/said control unit (50) is connected to the loading cell of the collection container (102) and to the pressure sensor (104), said control unit (50) being configured for:
- determining an alarm condition as a function of:
   ∘ said one or more measured values of weight of the collection container (102), optionally if the measured values of weight of the collection container (102) are greater than the threshold value of weight and/or
   ∘ said one or more measured values of pressure, optionally if the measured values of pressure in the heat exchange unit (98) indicate the presence of the clogging condition, and subsequently
- commanding an emitter (97) for the reproduction of an alarm signal, and/or
- commanding a cleaning procedure of said heat exchange unit (98).

In a 131^{st} aspect according to any one of the preceding aspects from the 124^{th} to the 130^{th} the plant comprises a recirculation valve (110) active on the recirculation line (108) and having:
- an inlet door (110a) in communication with an upstream section of the second branch (108b) of the recirculation line (108) which receives the fluid from the heat exchange unit (98),
- a first outlet door (110b) in communication with a downstream section of the second branch (108b) of the recirculation line (108),
- a second outlet door (110c) in communication with the first branch (108a) of the recirculation line (108).

In a 132^{nd} aspect according to the preceding aspect the plant comprises a connection branch (112) which connects the second outlet door (110c) of the recirculation valve (110) and the first branch (108a) of the recirculation line (108).

In a 133^{rd} aspect according to any one of the preceding aspects from the 124^{th} to the 132^{nd} the plant comprises a check valve (111) active on the first branch (108a) of the recirculation line (108) for preventing the movement of the heating fluid along the first branch (108a) and toward the reactor (1). In a 134^{th} aspect according to the preceding aspect the check valve (111) is located on a section of the first branch (108a) of the recirculation line in interposition between a joining point (J) between the connection branch (112) and the first branch itself and the reactor (1). In a 135^{th} aspect according to any one of the four preceding aspects the recirculation valve (110) is configurable between:
- a first operative condition wherein it allows the passage of the heating fluid through the first outlet door (110b) and at the same time prevents the passage of the heating fluid through the second outlet door (110c),
- a second operative condition wherein it allows the passage of the heating fluid through the second outlet door (110c) and at the same time prevents the passage of the heating fluid through the first outlet door (110a).

In a 136^{th} aspect according to the preceding aspect a/the control unit (50) is connected to the recirculation valve (110) and wherein the cleaning procedure of the control unit (50) comprising the steps of:
- commanding the movement of the recirculation valve (110) from the first to the second operative condition,
- commanding in activation one or more cleaning nozzles (106) which operate in the hot fluid chamber (98') of the heat exchange unit (98) for delivering a cleaning fluid in the hot fluid chamber itself and in the collection tank (102).

In a 137^{th} aspect according to any one of the preceding aspects from the 110^{th} to the 136^{th} the plant comprises:
- a plurality of heat exchange units (98),
- upper connection curves (107a) which upperly connect the hot fluid chambers (98') of adjacent heat exchange units (98), and/or
- lower connection curves (107b) which inferiorly connect the hot fluid chambers (98') of adjacent heat exchange units (98),
- connection ducts (122) which connect said one or more cold fluid channels (98") of adjacent heat exchange units, wherein said connection ducts (122) are housed in the upper and lower connection curves (107a, 107b).

In a 138^{th} aspect according to any one of the preceding aspects from the 110^{th} to the 137^{th} the plant comprises a filter (91), optionally a cyclonic filter, which operates downstream of the combustion chamber (62) for separating dusts or debris from exhaust gases leaving the combustion chamber (62).

In a 139^{th} aspect according to the preceding aspect the filter (91) comprises:
- an exhaust gas inlet (92) in communication with a section of the exhaust gas evacuation line (73) downstream of the outlet (64) of the combustion chamber (62),
- a filtered gas outlet (93) destined to expel filtered gases in a section of the exhaust gas evacuation line (73) upstream of the heat exchange unit (98),
- a debris outlet (94) destined to receive dusts or debris separated from exhaust gas in inlet to the filter.

In a 140^{th} aspect according to any one of the two preceding aspects the filter (91) comprises:
- a collection tank (95) in communication with the debris outlet (94) for withdrawing dusts or debris, wherein the collection tank (95) is placed in a lower area of the filter (91),
- a loading sensor (96) associated to the collection tank (95) and configured for generating a signal representative of a weight of the collection tank (95).

In a 141^{st} aspect according to the preceding aspect a/the control unit (50) is connected to the loading sensor (96) and configured for:
- receiving one or more signals generated by said loading sensor (96),
- determining one or more measured values of weight of the collection tank (95) as a function of the signals received from the loading sensor (96),
- comparing each weight measured value of the dusts in the collection tank (95) with a threshold value of weight.

In a 142^{nd} aspect according to the preceding aspect the plant comprises a/said control unit (50) connected to the loading sensor of the collection tank (95) and configured for performing at least one of the following steps:
- commanding an emitter (97) for reproducing an alarm signal as a function of said one or more measured values of weight, optionally if said one or more measured values of weight are greater than the threshold value of weight,
- commanding a maintenance procedure of said filter.

In a 143^{rd} aspect according to any one of the preceding aspects from the 110^{th} to the 142^{nd} the plant comprises a bypass line (99) connected to a section of the exhaust gas evacuation line (73) downstream of the outlet (64) of the combustion chamber (62) of the apparatus (60) and optionally upstream of the heat exchange unit (98).

In a 144^{th} aspect according to the preceding aspect the plant comprises an auxiliary gas movement device (123), for example a fan, active on the bypass line (99) for ejecting exhaust gases, for example air, in an environment outside the plant.

In a 145^{th} aspect according to any one of the two preceding aspects the plant comprises a bypass valve (101) active on the bypass line (99) for selectively allowing the passage of gas in said bypass line (99).

In a 146^{th} aspect according to any one of the preceding aspects from the 110^{th} to the 145^{th} the plant comprises a temperature sensor (90) active on the outlet (64) of the combustion chamber (62) and configured for generating a signal representative of a gas temperature leaving the combustion chamber (62).

In a 147^{th} aspect according to the preceding aspect a/the control unit (50) connected to the temperature sensor (90) and configured for:
- receiving one or more temperature signals generated by said temperature sensor (90),
- determining one or more measured values of temperature as a function of the signals received from the temperature sensor (90),
- comparing each temperature measured value with a threshold value of temperature, optionally comprised between 800°C and 1200°C, even more optionally comprised between 900°C and 1100°C.

In a 148^{th} aspect according to the three preceding aspects the control unit (50) is connected to the bypass valve (101) and configured for commanding an opening condition thereof as a function of said measured values of temperature from the temperature sensor (90), optionally if one or more of said measured values of temperature are greater than the threshold value of temperature.

In a 149^{th} aspect according to any one of the preceding aspects from the 110^{th} to the 148^{th} the plant comprises a reactor according to any one of the preceding aspects from the 1^{st} to the 67^{th} aspect.

In a 150^{th} aspect it is provided a process for the treatment of organic material through a plant according to any one of the preceding aspects from the 110^{th} to the 150^{th}.

In a 151^{st} aspect according to the preceding aspect the process comprises the steps of:
- supplying organic material inside the treatment chamber (2) of the reactor (1),
- moving organic material through the main conveyor (17) of the reactor (1),
- heating the organic material through the heater of the reactor (1),
- expelling a combustible gas generated by the heating of the organic material from the treatment chamber (2) of the reactor (1) and injecting it in the combustion chamber (62) of the apparatus (60).

In a 152^{nd} aspect according to the preceding aspect the step of expelling the combustible gas in the combustion chamber (62) of the apparatus (60) comprises the sub-step of conveying, through the connection channel (81), said combustible gas in the burner (75) of the apparatus (60).

In a 153^{rd} aspect according to any one of the three preceding aspects the process comprises a step of injecting, through the comburent gas supply line (85), a comburent gas, for example air, in the fluid supply circuit (65) of the apparatus (60).

In a 154^{th} aspect according to any one of the four preceding aspects the process comprises a step of withdrawing an exhaust gas from the combustion chamber (62) of the apparatus (60) and subsequently:
- channeling said exhaust gas withdrawn from the combustion chamber (62) in the exhaust gas evacuation line (73).

In a 155^{th} aspect according to the preceding aspect the process provides for the step of channeling, through the bypass line (99), said exhaust gas in an environment outside the plant.

In a 156^{th} aspect according to any one of the preceding aspects from the 150^{th} to the 155^{th} the process comprises a step of heating which involves the following sub-steps:
- conveying in the hot fluid chamber (98') of the heat exchange unit, the exhaust gas coming from the combustion chamber,
- supplying, in said one or more cold fluid channels (98") of the heat exchange unit (98), a fluid to be heated coming from the fluid supply line of the fluid heater (5) of the reactor (1),
- expelling, in an environment outside the plant, the exhaust gas from the hot fluid chamber (98'),
- moving, in the fluid supply line of the radiating heater (5) of the reactor (1), a heated fluid coming from said one or more cold fluid channels (98") of the heat exchange unit (98).

In a 157^{th} aspect according to the preceding aspect the step of conveying the exhaust gas in the hot fluid chamber (98') comprises a step of withdrawing said exhaust gas from the exhaust gas evacuation line (73).

In a 158^{th} aspect according to any one of the two preceding aspects the steps of supplying the fluid to be heated in said one or more cold fluid channels (98") and moving the heated fluid in the fluid supply line of the reactor (1) comprises the sub-step of moving, through the recirculation pump (109), said fluids in the first and second branch (108a, 108b) of the recirculation line (108).

In a 159^{th} aspect according to any one of the preceding aspects from the 150^{th} to the 158^{th} the process comprises a step of discharging dusts from the collection container (102) associated to the heat exchange unit (98), as a function of weight values of the collection container itself, optionally if said weight values of the collection container (102) are greater than a threshold value of weight.

In a 160^{th} aspect according to any one of the preceding aspects from the 150^{th} to the 159^{th} the process comprises a cleaning procedure of said heat exchange unit (98) as a function of weight values of the collection container (102) and/or as a function of measured values of a pressure detected in the hot fluid chamber (98') of the heat exchange unit (98), said cleaning procedure comprises the step of commanding in activation one or more cleaning nozzles (106) which operate in the hot fluid chamber (98') of the heat exchange unit (98).

In a 161^{st} aspect according to any one of the preceding aspects from the 150^{th} to the 160^{th} the process comprises a step of filtering, through the filter (91), the exhaust gas leaving the combustion chamber (62) of the apparatus (60).

In a 162^{nd} aspect according to any one of the preceding aspects from the 150^{th} to the 161^{st} the process comprises a maintenance procedure of the filter (91) of the apparatus (60) comprising a step of discharging dusts from the collection tank (95) as a function of weight values of the collection tank (95), optionally if said weight values of the collection tank (95) are greater than a threshold value of weight.

In a 163^{rd} aspect according to any one of the preceding aspects from the 150^{th} to the 162^{nd} the process comprises a step of conveying gas in the bypass line (99) as a function of one or more temperature values detected by the temperature sensor (90), optionally wherein said temperature values are greater than the threshold value of temperature, even more optionally comprised between 900°C and 1200°C.

In a 164^{th} aspect it is provided a conveyor (17) comprising:
- a shaft (18) movable by rotation around an axis parallel to a/the prevalent development longitudinal direction (A) of the main channel (31),
- one or more helical rotors (19) radially emerging from the shaft (18) and interconnected to each other to define a coil,
wherein at least one of said one or more helical rotors (19) is a hollow rotor (20) having:
- a perimeter edge (21) extending itself as a coil around the shaft (18),
- a cavity (22) defining a passage radially interposed between the shaft (18) of the main conveyor and the perimeter edge (21) of the hollow rotor (20).

In a 165^{th} aspect according to the preceding aspect each hollow rotor (20) has one or more transversal spokes (23) which engage respective sections of the perimeter edge (21) to the shaft (18).

In a 166^{th} aspect according to the preceding aspect the spokes (23) of a respective hollow rotor (20) are angularly offset to each other, optionally by an angle comprised between 70° and 110°, even more optionally comprised between 80° and 100°.

In a 167^{th} aspect according to any one of the three preceding aspects at least one of said one or more helical rotors (19) is a solid rotor (24) free from cavities which extends radially from the shaft to an inner surface of the main channel (31).

In a 168^{th} aspect according to the preceding aspect at least one of said one or more hollow rotors (20) are consecutively joined to a solid rotor (24).

In a 169^{th} aspect according to any one of the two preceding aspects at least a solid rotor (24) of the conveyor (17), optionally having a or more coils, operates at one or each terminal section of the shaft (18).

In a 170^{th} aspect according to any one of the preceding aspects from the 164^{th} to the 169^{th} the conveyor (17) comprises one or more wings (25) transversely emerging from the shaft (18) and spaced from the helical rotors (19), configured for terminally contacting an inner surface of the main channel (31).

In a 171^{st} aspect according to the preceding aspect the wings (25) are spaced apart to each other along the shaft (18).

In a 172^{nd} aspect according to any one of the two preceding aspects each wing (25) is angularly offset from an adjacent wing, optionally by an angle comprised between 70° and 200°.

In a 173^{rd} aspect according to any one of the three preceding aspects each wing (25) has:
- a rod (25a) engaged transversely to the shaft (18) of the conveyor (17),
- a terminal body (25b) engaged to the rod (25a) on the opposite side to the shaft (18).

In a 174^{th} aspect according to the preceding aspect the terminal body (25b) of the wing (25) has a platelike conformation.

In a 175^{th} aspect according to any one of the two preceding aspects the terminal body (25b) has an elongated conformation transversely to the rod (25a) of the wing (25), defining, in cooperation with the rod (25a), a substantially "T" or "L" shape.

In a 176^{th} aspect according to any one of the three preceding aspects the terminal body (25b) of the wing (25) has at least a contact surface sloped with respect to a horizontal plane passing by the shaft (18) of the conveyor (17). In a 177^{th} aspect according to any one of the preceding aspects from the 164^{th} to the 176^{th} the conveyor (17) comprises:
- at least a first sector comprising a plurality of helical rotors (19) interconnected to each other,
- at least a second sector, adjacent to the first area and comprising a plurality of wings (25).

In a 178^{th} aspect according to the preceding aspect the conveyor (17), for a preponderant part of the length of the shaft (18), has a plurality of first sectors interspersed by second sectors.

In a 179^{th} aspect according to any one of the two preceding aspects the first and second sectors cover at least the 70% of the length of the shaft (18).

In a 180^{th} aspect according to any one of the three preceding aspects the conveyor (17) has respective first sectors in proximity of each terminal section of the shaft (18), said first sectors comprising solid rotors and/or hollow rotors (19).

In a 181^{st} aspect according to any one of the four preceding aspects a central section of the conveyor (17) has one or more first sectors comprising exclusively hollow rotors (19).

### BRIEF DESCRIPTION OF THE DRAWINGS

Some embodiments and aspects of the invention will be described herein with reference to the accompanying figures, provided for illustrative purposes only and therefore not limiting wherein:
- figure 1 is a perspective and schematic view of a plant for the treatment of organic material according to the aspects of the present invention;
- figure 2 is a longitudinal cross-sectional view of a reactor according to the aspects of the present invention;
- figure 3 is a detailed perspective view of a gas branch manifold of the reactor of figure 2;
- figure 4 is a perspective view of the reactor of figure 2;
- figure 5 is a further perspective view of a cross-section of the reactor of figure 2;
- figure 6 a perspective view of a main conveyor that may operate in the reactor of figure 2;
- figures 7 and 8 are respective partially cross-sectional perspective views of a loading conveyor and an unloading conveyor usable with the reactor of figure 2;
- figure 9 is a side section view of a burner according to the present invention;
- figure 10A is a detail side view of a burner according to the present invention;
- figure 10B is a longitudinal view of a burner variant according to other aspects of the present invention;
- figures 11 and 12 are respectively a perspective view and a side view of plant parts for the treatment of organic material according to the aspects of the present invention.

### DEFINITIONS AND CONVENTIONS

It is noted that in the present detailed description corresponding parts shown in the various figures are indicated with the same numerical references. Figures may illustrate the object of the invention through unscaled representations; therefore, parts and components shown in the figures relating to the object of the invention may relate exclusively to schematic representations.

### CONTROL UNIT

At least one between the reactor and the plant herein described and claimed may comprise/use at least a control unit designed to control the operating conditions set up by the reactor itself and/or plant and/or to control the steps of the processes herein described and/or claimed.

The control unit may be a single unit or be formed by a plurality of distinct control units depending on design choices and operational requirements.

As a control unit it is intended a component of electronic type which may comprise at least one of: a digital processor (CPU), an analogue type circuit, or a combination of one or more digital processors with one or more analogue type circuits. The control unit may be *"configured*" or *"programmed*" to perform some steps: this may be practically made by any means that allows to configure or program the control unit. For example, in case of a control unit comprising one or more CPUs and one or more memories, one or more programs may be stored in appropriate memory banks connected to the CPU or CPUs; the program or programs contain instructions which, when executed by the CPU or by the CPU(s), program or configure the control unit to perform the operations described in relation to the control unit. Alternatively, if the control unit is/or comprises circuitry of an analogue type, then the circuit of the control unit may be designed to include circuitry configured, in use, to process electrical signals in such a way as to perform the steps related to the control unit. Parts of the process herein described may be made by means of a data processing unit or control unit, technically replaceable with one or more computers designed to carry out a portion of a software program or firmware uploaded onto a memory support. This software program may be written in any programming language of known type. The computers, if two or more in number, may be connected to each other by means of a data connection such that their computing powers are in any way shared; the same computers may thus be installed in geographically different locations as well, thereby realizing by means of the aforesaid data connection a distributed computing environment. The data processing unit, or control unit, may be a *general-purpose* processor configured to perform one or more parts of the process identified in the present invention via the software or firmware program, or being an ASIC or dedicated processor or an FPGA, specifically programmed to carry out at least part of the operations of the process herein described. The memory support may be non-transitory and may be inside or outside the processor, or control unit, or data processing unit, and can, specifically, be a memory geographically located remotely with respect to the computer. The memory support may also be physically divided into several portions, or in the form of *cloud,* and the software or firmware program may be stored on memory portions geographically divided to each other.

### DETAILED DESCRIPTION

### General description of plant 100

With reference to the accompanying figures, a plant for the thermochemical treatment of organic material, for example sludges from civil or industrial sewage, for producing a combustible gas subsequently referred to as synthetic gas, has been overall indicated with 100. Further carbonaceous residues, obtained by heating the organic material, may be refined to obtain further products such as, for example, active carbons.

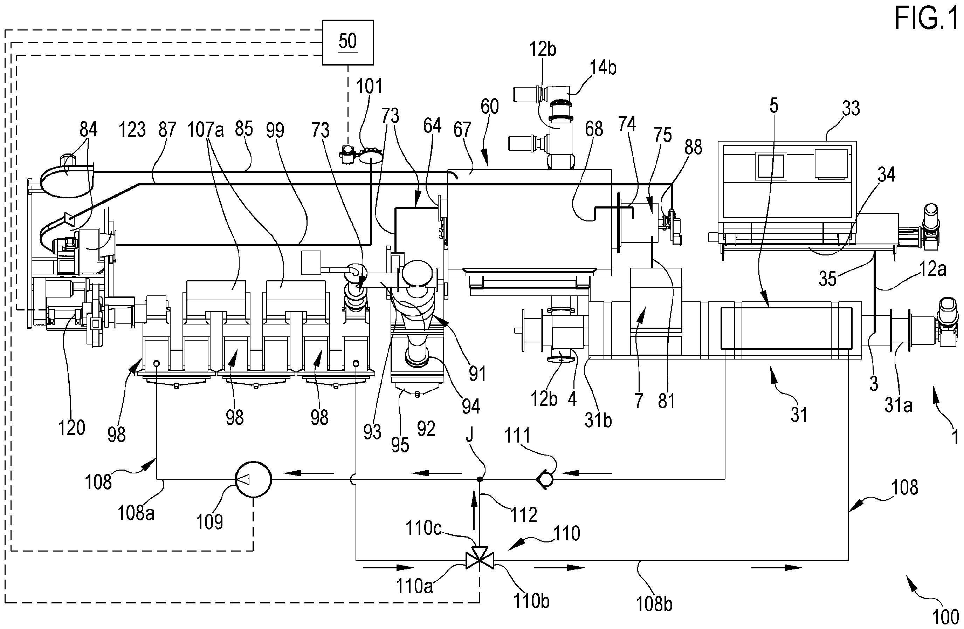

As shown in Figure 1, the plant 100 comprises a reactor 1 for the production of synthetic gas by means of heating the organic material at temperatures comprised between 400°C and 800°C, in environments in the absence of oxidizing agents, at a controlled temperature and pressure. A heating of the reactor 1 at such temperatures implies a high energy consumption that may cause high operating costs of the plant. The present invention solves this drawback by using an apparatus 60 suitable for using the synthetic gas as combustible to generate heat useful for heating the reactor. In other words, the apparatus 60 allows, in cooperation with other elements of the plant 100 described below, to self-power the reactor 1 for treating the organic material and minimizing the operating costs of the plant itself. Additionally, the on-site combustion of the synthetic gas by means of the apparatus 60, avoids complex and expensive storage activities of the synthetic gas.

Before going into the details of the structure and operation of the individual elements that compose the plant 100, the general operation and structure of the plant will be described below, focusing on the interactions between the various components.

As mentioned, the reactor 1 comprises at least one heater active on a main channel 31 of the reactor 1 to heat, partially or integrally, a treatment chamber 2 inside the main channel 31, in which the organic material to be treated is located. The heater comprises a fluid heater 5 formed by a supply line 5a, for example helically shaped, whose coils are wound around the reactor, where circulates a heating fluid, optionally oil, for heating the organic material and transferring heat to the main channel 31. During the normal operation at steady state of the plant, the heating of the organic material results in the production of synthetic gas which is transferred, via a connection channel 81, to the apparatus 60 for being combusted when mixed with a comburent gas, optionally air. The supply of the comburent gas to the apparatus 60 may be made by means of a comburent gas supply line 85 for channeling the comburent gas itself, from an environment outside the plant, towards the apparatus 60. The plant 100 may also comprise a movement device 84, for example a fan, active on the comburent gas supply line 85 for supplying the comburent gas towards the apparatus 60. After the combustion of the synthetic gas with the comburent gas, an exhaust gas having a temperature comprised between 800°C and 1000°C is obtained, which is expelled from the apparatus 60 through an exhaust gases evacuation line 73 which channels it to a heat exchange unit 98 later described. The plant 100 may also comprise a suction device 120, for example a fan, operating on the exhaust gas evacuation line 73, to suck the exhaust gas from the apparatus 60, move it in the heat exchange unit 98 and expel it in the environment.

Unlike what has been described above which, as it has been said, refers to a condition of normal operation at steady state of the plant 100, in a condition of first start-up of the plant itself, and therefore in the absence of synthetic gas produced by the reactor, it is provided, by means of an auxiliary access 88, the forced supply of an exhaust gas, for example methane gas, for producing the exhaust gas useful for heating the heating fluid circulating in the reactor 1.

As mentioned above, the exhaust gas in the apparatus 60, is used by the heat exchange unit 98 for transferring heat to the heating fluid circulating in the fluid heater 5 of the reactor 1. The plant 100 may therefore have a recirculation line 108 that transfers the heating fluid of the fluid heater 5 from the reactor 1 until the heat exchange unit 98 is reached for being heated. In an example, the recirculation line 108 comprises a first branch 108a connected to a terminal end of the fluid heater 5 for channeling the heating fluid to the heat exchange unit 98, as well as a second branch 108b, connected to an initial end of the fluid heater 5, for receiving the heating fluid, opportunely heated, deriving from the heat exchange unit 98. The plant 100 may also comprise a recirculation pump 109, for example active on the first branch 108a of the recirculation line 108 as shown in Figure 1, for moving the heating fluid through the branches of the recirculation line 108 itself and into the fluid supply line of the fluid heater 5. The plant may also comprise a recirculation valve 110 active on the recirculation line 108 for selectively allowing the passage on the second branch 108b of the recirculation line itself. In an example, the recirculation valve 110 may be a three-way diverter valve, having an inlet door 110a in communication with an upstream section of the second branch 108b, as well as a first and a second outlet door 110b, 110c, respectively in communication with the second and first branch 108b, 108a of the recirculation line 108. The plant may also comprise a connection branch 112 that connects the second outlet 110c of the recirculation valve 110 with the first branch 108a of the recirculation line 108. In a first operating condition, coinciding with a normal operating condition of the plant, the recirculation valve 110 allows exclusively the passage of the heating fluid along the second branch 108b of the recirculation line 108. Vice versa, in a second operating condition, the recirculation valve 110 exclusively allows the passage of the heating fluid along the connection branch 112 to reintroduce the heating fluid into the first branch 108a of the recirculation line 108, thereby isolating the reactor 1. The plant 100 may comprise a control unit 50 connected to the recirculation valve 110 and configured to control the movement thereof between the first and second operating condition if a cleaning procedure of the heat exchange unit 98 is performed, as described below. It is noted that the control unit commands the second operating condition of the recirculation valve 110 in order to facilitate the dissipation of heat retained by the heating fluid circulating through the heat exchange units, and to avoid vaporization, and therefore the ineffectiveness, of a cleaning fluid dispensed during the cleaning procedure. By reducing the temperature of the heating fluid, an efficient and effective cleaning of the heat exchange unit 98 may thus be realized.

The plant may further comprise a check valve 111 which operates in the first branch 108a of the recirculation line 108, in interposition between a joining point J between the connection branch 112 with the first branch 108a of the recirculation line and the reactor 1. This check valve 111 prevents, in the second operating condition of the recirculation valve 110, the passage of the heating fluid into the first branch 108a of the recirculation line, in the direction of the reactor 1.

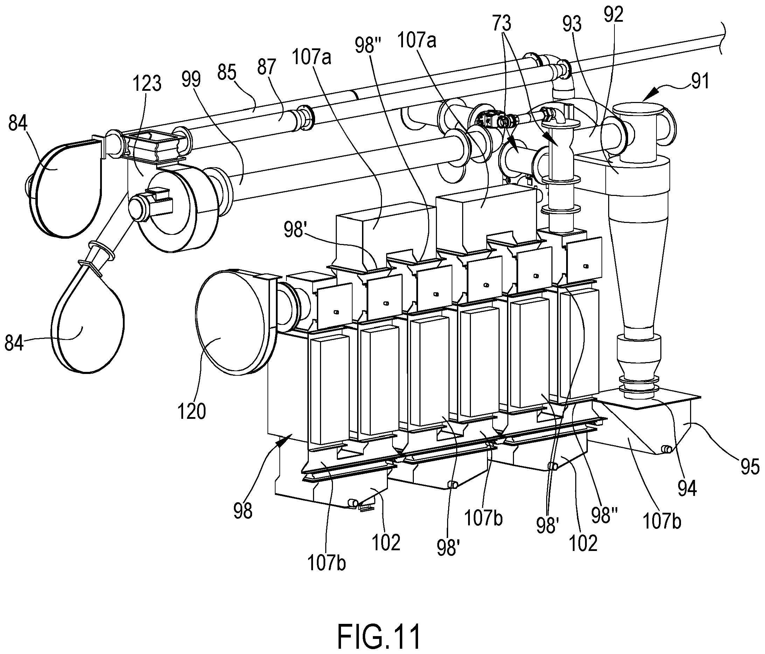

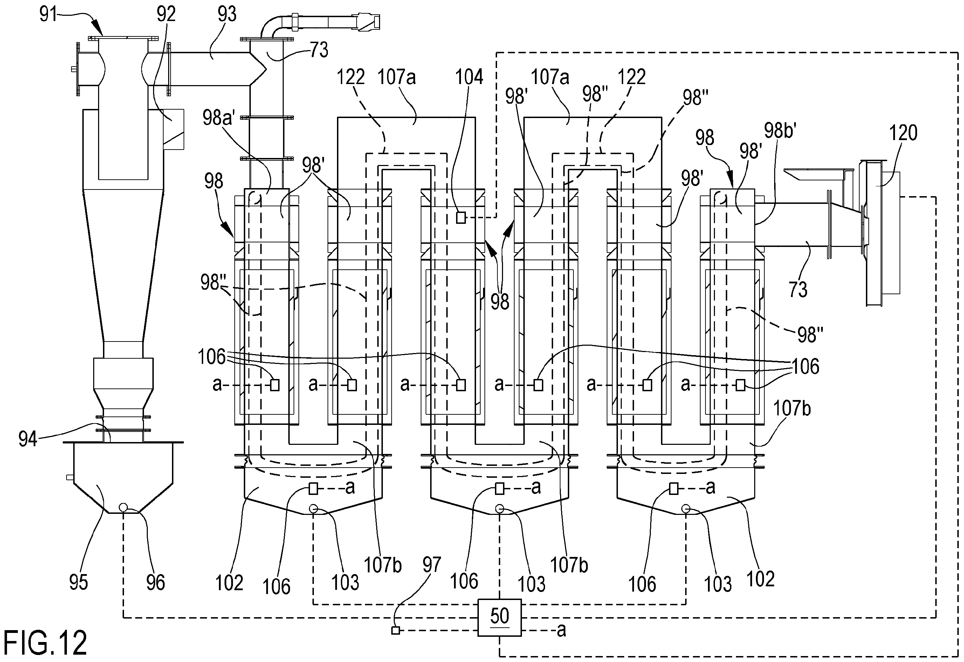

As shown in detail in figures 11 and 12, the plant 100 comprises a heat exchange unit 98 responsible for performing the heating of the working fluid by exploiting the exhaust gas in the apparatus 60. The heat exchange unit 98 may have a hot fluid chamber 98' destined to receive the exhaust gas deriving from the apparatus 60 and exchange heat with one or more cold fluid channels 98", present in the hot fluid chamber 98' and containing the heating fluid deriving from the fluid heater 5. In an example, the hot fluid chamber 98' has a hot fluid inlet connected to the exhaust gases evacuation line 73 and a hot fluid outlet 98b' connected to the suction device 120. According to what is shown in figures 11 and 12, the plant 100 may comprise a plurality of heat exchange units 98, interconnected to each other by means of upper 107a and lower 170b connection curves or joints, to define a single hot fluid chamber 98' that receives the exhaust gas from the exhaust gas evacuation line and channels it towards the suction device 120 for being expelled into the environment. Each cold fluid channel 98" may be a single duct or, if in presence of a plurality of heat exchange units, may have different sections interconnected to each other by connection ducts 122 housed in the upper and lower connection curves 107a, 107b, to define a single channel traversed by the heating fluid. It is noted that the cold fluid channel 98" is connected at its opposite ends to the first and to the second branch 108a, 108b of the recirculation line 108, defining, in cooperation with the recirculation line 108 itself and with the fluid supply line 5a of the fluid heater 5, a single closed-loop circuit.

The plant 100 may also comprise one or more collection containers 102, each of which located inferiorly and in communication with a respective heat exchange unit 98 for withdrawing dusts or solid debris which separate themselves from the exhaust gas in circulation in the hot fluid chamber 98'. A loading cell 103 may be associated to each collection container 102 for generating a signal representative of a weight of the collection container itself: as a function of this signal it is possible to determine an alarm condition indicative of a maximum filling of the collection container 102. The control unit 50 connected to the loading cell/s 103 is configured for:
- receiving one or more signals generated by said loading cell/s 103,
- determining one or more measured values of weight of each collection container 102 as a function of the signals received from the respective loading cell 103,
- comparing each weight measured value of each collection container 102 with a threshold value of weight.

The control unit 50 is then configured for determining an alarm condition, as a function of the measured values of weight of each collection container 102, which commands an emitter 97 for reproducing an alarm signal (for example optical and/or acoustic) addressed to a user, in charge of performing a manual cleaning procedure of the collection container 102 and of one or more heat exchange units 98. Alternatively, the control unit 50 may be configured for commanding an automatic cleaning procedure of the heat exchange unit 98 which involves commanding the activation of one or more cleaning nozzles 106 inside the hot fluid chamber 98' of a respective heat exchange unit 98, for dispensing a cleaning fluid acting both in the hot fluid chamber 98' itself and in the collection tank 102. It is noted that the cleaning procedure additionally involves commanding the movement of the recirculation valve 110 from the first to the second operating condition.

The plant may also comprise one or more pressure sensors 104 which operate inside a hot fluid chamber 98' of a respective heat exchange unit 98, each of which configured for generating a pressure signal related to the pressure inside a respective hot fluid chamber 98'. It is noted that the presence of pressure sensors 104 facilitates the determination of possible clogging in the hot fluid chambers 98' by means of the detection of the trend over time of the pressure in a predefined point of the heat exchange unit or pressure variation over the heat exchange unit itself. The control unit 50 may be connected to each pressure sensor 104 and configured for:
- receiving one or more signals generated by each pressure sensor 104,
- determining one or more measured values of pressure as a function of the signals received from a respective pressure sensor 104,
- comparing said one or more measured values of pressure with a predefined criterion for assessing the presence or not of a clogging condition; for example each pressure measured value in a same point of the heat exchange unit 98 may be compared with a threshold pressure value for assessing whether or not there is a pressure drop which indicates the presence of clogging; alternatively pressure values between two points of the unit 98 may be compared for deducting the presence of pressure losses indicative of clogging.

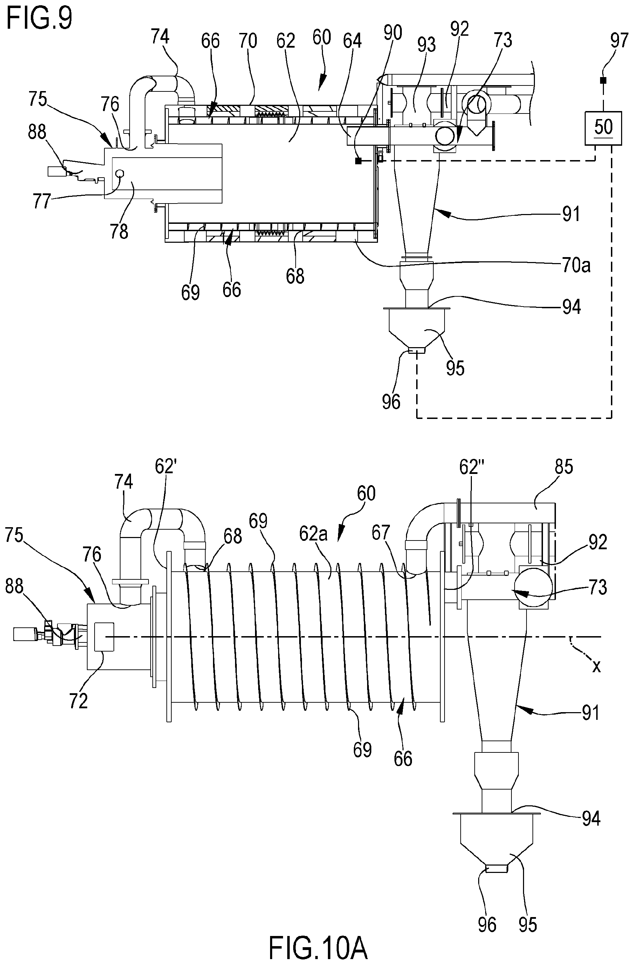

Subsequently, the control unit 50 may be configured for determining an alarm condition if one or more measured values of pressure indicate the occurrence of clogging and subsequently, commanding the emitter 97 for the emission of an alarm signal or commanding the execution of the automatic cleaning procedure described above. As for example shown in figures 9, 10A and 11, the plant may also comprise a filter 91, optionally of cyclonic type, which operates on the exhaust gases evacuation line 73 upstream of the heat exchange unit 98, for separating dusts or debris mixed in the exhaust gas leaving the apparatus 60. The filter 91 may comprise an exhaust gases inlet 92, in communication with the exhaust gases evacuation line 73, for receiving the exhaust gas, as well as a filtered gas outlet 93 for channeling filtered gases in a downstream section of the exhaust gases evacuation line in direction of the heat exchange unit 98. The filter 91 may also comprise a debris outlet 94 in communication with a collection tank 95 for the deposit of solid particles separated from the exhaust gas. Associated to the collection tank 95, the filter 91 may have a loading sensor 96 for generating one or more signals representative of a weight of the collection tank itself and detecting a condition of maximum filling of the collection tank itself. The control unit 50 is connected to the loading sensor 96 and is configured for:
- receiving one or more signals generated by the loading sensor 96,
- determining one or more measured values of weight of the collection tank 95 as a function of the signals received from the loading sensor 96,
- comparing each weight measured value of the collection tank 95 with a threshold value of weight.

The control unit 50 is then configured for determining an alarm condition as a function of the measured values of weight of the collection tank 95, for example if these measured values of weight are greater than a threshold value of weight. This alarm condition involves commanding the emitter 97 for the reproduction of an alarm signal, for example optical or acoustic, or for commanding an automatic maintenance procedure of the filter.

The plant may also comprise a bypass line 99 connected to a section of the exhaust gases evacuation line 73 downstream of the outlet 64 of the apparatus 60, for deviating a flow of the exhaust gas directly in the environment without passing through the heat exchange unit 98 and/or the filter 91. It is noted that if the exhaust gas leaving the apparatus 60 has a temperature greater than a threshold value of temperature, optionally comprised between 800°C and 1200°C, it is preferable to disperse directly into the environment the exhaust gas and avoid unwanted overheating and malfunctions of the heat exchange unit 98. For this purpose, the plant 100 may also comprise a bypass valve 101 which operates on the bypass line 99 for selectively allowing the passage of the exhaust gas through the bypass line itself. The plant 100 may also comprise an auxiliary gas movement device 123, for example a fan, active on the bypass line 99 for ejecting the exhaust gas into the atmosphere. The detection of the temperature of the exhaust gas is made by means of a temperature sensor 90, active on the outlet 64 of the apparatus 60 (figure 9) and configured for generating one or more signals representative of a temperature of the exhaust gas. The control unit 50 is connected to the temperature sensor 90 and is configured for:
- receiving one or more temperature signals generated by said temperature sensor 90,
- determining one or more measured values of temperature as a function of the signals received by the temperature sensor 90,
- comparing each measured values of temperature with the threshold value of temperature.

If the control unit 50 detects that one or more of the measured values of temperature, obtained by means of the temperature sensor 90, are greater than the threshold value of temperature, then the control unit 50 is configured for commanding an opening condition of the bypass valve for allowing the channeling of the exhaust gas in the bypass line 99 and, consequently, preventing the passage thereof towards the heat exchange unit 98.

To complete the description of the plant 100, the structure and the functionality of the single reactor 1 and the single apparatus 60 will be described in detail below.

### Detailed description of the reactor 1

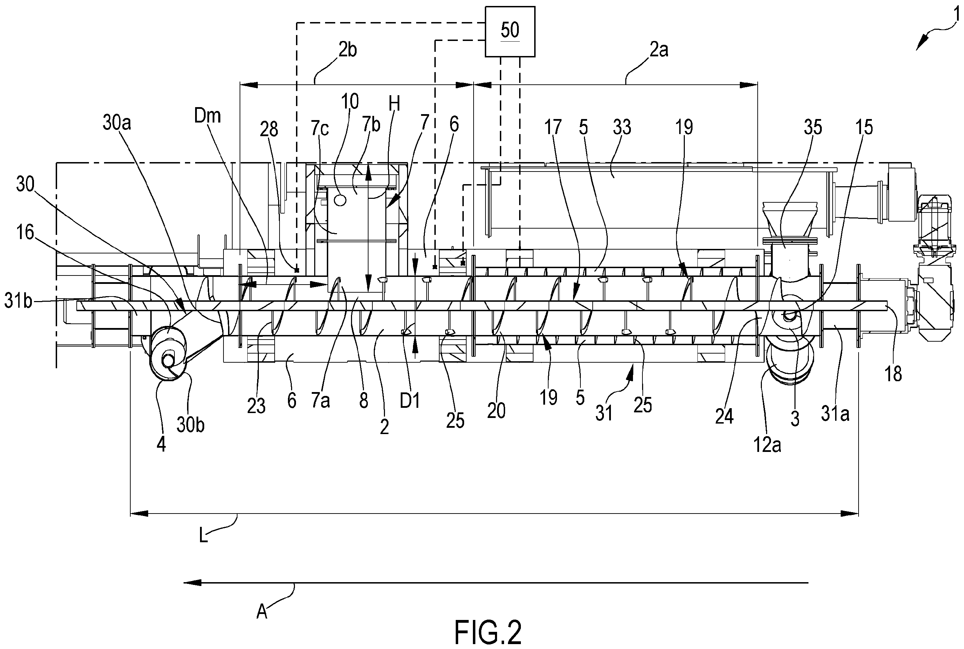

With reference to the accompanying figures, the reference number 1 indicates a reactor for the treatment of organic material, suitable for preventing the formation and the transport of dusty particles mixed with synthetic gases produced by the reactor itself. As for example shown in figure 2, the reactor 1 comprises a main channel 31 which defines a treatment chamber 2 where it is performed a pyrolytic treatment of the organic material. The main channel 31 has an elongated body having tubular shape, optionally cylindrical, for example having constant cross section. The main channel 31 extends along a longitudinal development direction A between an inlet 3 for receiving organic material to be treated and an outlet 4, in communication with the inlet 3, destined to unload the treated organic material outside the treatment chamber 2. The inlet 3 is for example a radial opening defined at a terminal end of the elongated body of the main channel 31, whereas the outlet 4 is for example an axial opening of the main channel 31 opposite to the inlet 3.

The reactor 1 may also have a connection channel 30, cylindrical tubular-shaped, which puts in communication the outlet 4 of the main channel 31 with an unloading conveyor 16 subsequently detailed, for the unload of material treated in the main channel 31. As for example shown in figure 2, the connection channel 30 has an axial access 30a engaged to the outlet 4 of the main channel 31 and a radial outlet 30b opposite to the axial access 30a. The connection channel 30 is sloped with respect to the main channel 31, having the axial access 30a misaligned from the radial outlet 30b of the connection channel 30 with respect to a direction parallel to the longitudinal development direction A of the main channel 31. In other words, the radial outlet 30b of the connection channel 30 results located inferiorly to the axial access 30a and consequently inferiorly to the outlet 4 of the main channel 31.

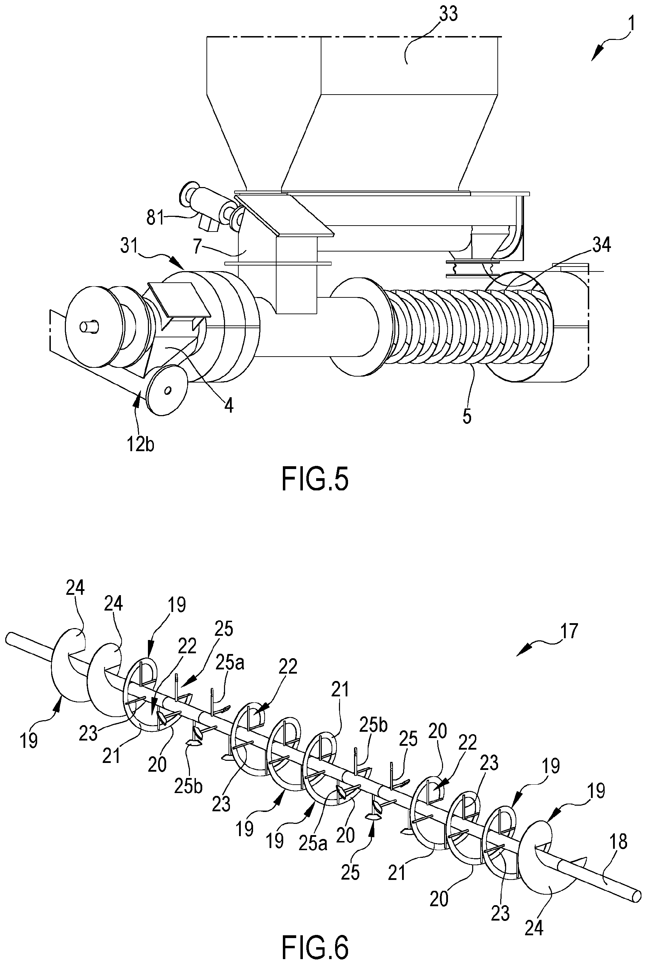

The reactor 1 may also comprise a heater active on the main channel for heating the organic material present in the treatment chamber 2. In the following, reference is made in a non-limiting way, to a heater comprising a fluid heater 5 and an electric heater 6. However, it is possible to provide a single heater comprising exclusively a fluid heater or an electric heater or other types of heaters. As for example shown in figures 2 and 5, the fluid heater 5 is active on a first section 2a of the main channel 31, next to the inlet 3 and extending for a preponderant part, optionally greater than the 60%, of an overall extension of the main channel measured between the inlet 3 and the outlet 4. The fluid heater 5 comprises a fluid supply line 5a which may be made with one or more ducts for the movement of a heating fluid. The ducts are placed in contact with an outer surface of the main body 31 for exchanging heat with an environment inside the main body 31 and heating the organic material. These ducts may have a single coil channel arranged along a helical trajectory around the main channel 31. In this regard, as shown in figure 5, the duct of the fluid supply line 5a of the fluid heater 5, may be formed by a helical sheet arranged radially around the main channel 31 of the reactor and upperly delimited by a tubular case 63 radially outside the main channel 31. The channel of the fluid supply line 5a where the heating fluid flows is then laterally delimited by successive sections of the helical sheet, whereas it is radially delimited by the outer surface of the main channel 31 and by the tubular case 63.

As previously mentioned (see figure 1), the fluid heater 5 may be connected to the first and to the second branch 108a, 108b of the recirculation line 108 for supplying, by means of the first branch 108a of the recirculation line 108, the heating fluid, optionally at low temperatures, to the heat exchanger and receiving, by means of the second branch 108b of the recirculation line itself, the heating fluid, at high temperatures. The connection between the fluid supply line 5a of the fluid heater 5 and the recirculation line may be made by means of connectors positioned at opposite ends of the fluid supply line 5a itself, allowing the inlet of hot heating fluid at an area of the line 5a next to the inlet 3 of the main channel 31 and supplying, from the side opposite to the inlet 3, cold fluid to the recirculation circuit 108. A fluid-tight connection between the fluid supply line 5a and the heat exchange unit 98, optionally made by connectors, allows the movement of relatively hot fluid in the reactor 1 and the discharge of relatively cold fluid from the reactor. The cooled fluid, after being reheated as previously detailed, is recirculated back to the reactor 1. As previously mentioned, the heater may also comprise an electric heater 6 active on a second section 2b of the main channel 31 interposed between the first section 2a and the outlet 4 of the main channel 31. The second section 2b extends for a terminal section of the main channel 31 next to the outlet 4, having a length lower than the first section 2a. The organic material may be almost totally heated by the fluid heater 5, whereas it may be only marginally heated by the electric heater 6. The electric heater 6 may comprise one or more electrical resistances in contact with the outer surface of the main channel 31 for heating the organic material when connected to the power grid.

The reactor 1 may also comprise a temperature sensor 28, active in the treatment chamber 2 in proximity of a gas outlet opening 8 and connected to the control unit 50 which is responsible for controlling the temperature of the fluid heater 5 and the electric heater 6. The temperature sensor 28 is configured for generating one or more signals representative of a temperature inside the treatment chamber 2, used by the control unit 50 for determining one or more measured values of temperature to be compared with a threshold value of temperature comprised between 280°C and 800°C, optionally comprised between 320°C and 680°C. The control unit 50 may also be connected to both the fluid heater 5 and to the electric heater 6 for commanding the functioning thereof as a function of measured values of temperature. Optionally the control unit 50 may command the heaters 5 and 6 in a completely independent manner, implementing dedicated control strategies for each heater. A temperature control strategy may for example involve heating the treatment chamber 2 by means of the fluid heater 5, until a first threshold is reached, for example comprised between 250°C and 450°C, followed by heating by means of the electric heater 6 until a second temperature threshold is reached, optionally comprised between 400°C and 800°C. It is noted however that both control logics implementable by the control unit 50, use as temperature feedback signal the signals provided by the temperature sensor 28.

The reactor may also comprise a pressure sensor 29 active in the treatment chamber 2 and configured for allowing the control unit 50 to maintain a substantially constant level of pressure in the treatment chamber 2: the pressure in the treatment chamber is for example constantly maintained lower than the environmental pressure present in the environment outside the reactor. The control unit 50 is connected to the pressure sensor 29 and is configured for:
∘ receiving one or more pressure signals generated by said pressure sensor 29,
∘ determining one or more measured values of pressure as a function of the signals received from the pressure sensor 29,
∘ verifying if said one or more of the measured values of pressure indicate that the pressure inside the treatment chamber is lower than the environmental pressure, reigning outside the plant.

According to an aspect the control unit 50 verifies if one or more of the measured values of pressure indicate that the pressure inside the treatment chamber is lower than the environmental pressure by a quantity comprised in a reference range between 10 Pa and 250 Pa, optionally between 20 Pa and 100 Pa.

If one or more measured values of the relative pressure in the reactor 1 are external to the above specified reference range, the control unit 50 is configured for commanding the suction device 120 for adjusting consequently the ejection of the synthetic gas from the main channel 31.

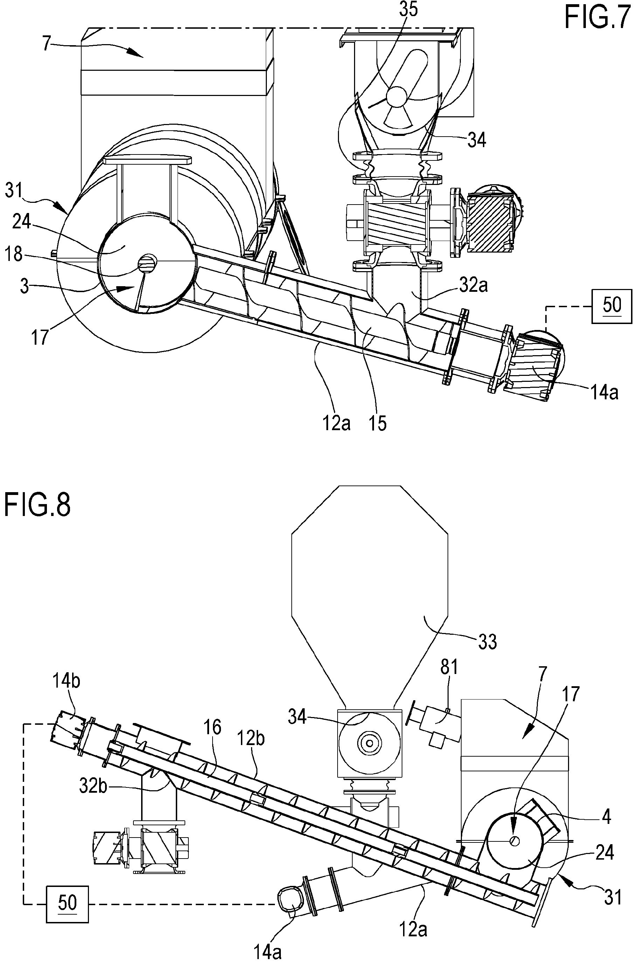

As for example shown in figure 7, the reactor 1 may comprise a loading conveyor 15 which operates in proximity of the inlet 3 of the main channel 31 for moving organic material in the treatment chamber 2. The loading conveyor 15 may be a screw or auger conveyor which operates inside a loading channel 12a engaged, at a first end 15a, to the inlet 3 of the main channel 31 for defining, in cooperation with the latter, a single channel. The loading channel 12a is laterally engaged to the main channel 31 at or in immediate proximity of the inlet 3 of the main channel 31, where, by means of an axial access, communicates with the treatment chamber 2. The loading channel 12a may also have, at a second end 15b opposite to the first end, an inlet mouth 32a configured for receiving organic material from a hopper 33 subsequently described. In an example, the inlet mouth 32a may have a connection shank radially emerging from the loading channel 12a for facilitating the connection with the hopper 33. The loading channel 12a and consequently the loading conveyor 15 are sloped with respect to the main channel 31, with the second end 15b which is located inferiorly to the first end 15a. In other words, the loading channel 12a is sloped with respect to a horizontal plane by an inner angle comprised between 10° and 85°, optionally comprised between 20° and 70°.

It is noted that this inclination of the loading channel 12a determines, during the steps of loading, the movement against gravity of the organic material, preventing the lifting and the supply of dusts in the treatment chamber 2 of the main channel 31. The reactor 1 may also comprise a motor 14a connected to the loading conveyor 15 at the second end 15b, for moving the loading conveyor 15 with respect to the loading channel 12a. The reactor 1 may also comprise said control unit 50, connected to the motor 14a associated to the loading conveyor 15, configured for commanding the movement thereof as a function of a predetermined speed profile, optionally at constant speed. As previously mentioned, the reactor 1 may also comprise or be associated to a hopper 33 connected to the loading conveyor 15 and configured for storing the organic material to be treated in the treatment chamber 2. The hopper 33 may have a container having a truncated pyramid shape or an inverted cone shape, equipped with an unloading opening 34 on a lower end of the container, for discharging the organic material downstream in the direction of the loading conveyor 15. The hopper 33 may also comprise an unloading channel 35 which connects the unloading opening 34 of the hopper with the inlet mouth 32a of the loading channel 12a, defining a single fluid tight connection which prevents the dispersion of dusts in the environment. The reactor 1 may also comprise a conveyor or an auger, activated by an electric motor, active on the unloading channel 35 for controlling the movement of organic material towards the loading channel 12a.

As for example shown in figure 6, the reactor 1 comprises a main conveyor 17 which operates in the main channel 31, for moving the organic material under treatment in the treatment chamber 2, from the inlet 3 to the outlet 4 along a predetermined treatment path inside the main channel 31. The main conveyor 17 may be a screw or auger conveyor having a shaft 18 movable by rotation about an axis parallel to the longitudinal development direction A of the main channel 31, from which radially emerge one or more helical rotors 19 interconnected to each other to define a coil. At least one of said helical rotors 19 is a solid rotor 24 extending seamlessly until in proximity of an inner surface of the main channel 31, for moving the material under treatment towards the outlet 4. In other words, each solid rotor 24 has an outer surface devoid of cavities for maximizing the area of contact with the material under treatment and efficiently moving it towards the outlet 4. The main conveyor 17 has a respective solid rotor 24 with one or more coils, at ends of the shaft 18 respectively next to the inlet 3 and to the outlet 4 of the main channel 31 and having hollow rotors 20 or wings 25 described below, at an intermediate section between the inlet and the outlet 3, 4 of the main channel 31.

In an example, one or more helical rotors 19 are hollow rotors 20, i.e. have a cavity 22 defining a passage radially interposed between the shaft 18 of the main conveyor 17 and a perimeter edge 21 of the hollow rotor 20 which surrounds the shaft 18. It is noted that the cavity 22 of each hollow rotor 20 allows not only the passage of organic material under treatment, but also the passage of synthetic gases generated by heating of the organic material itself, thereby increasing the efficiency of the treatment. The presence of hollow rotors 20 prevents also a movement of synthetic gases through the material under treatment, thus avoiding the lifting of dusty particles which, when mixed with the synthetic gas, contribute to reduce the overall quality of the synthetic gas.

The hollow rotors 20 may be engaged to the shaft 18 by means of an adjacent solid rotor 24 or by means of one or more transversal spokes 23 which connect respective sections of the perimeter edge 21 to the shaft 18. In an example, each hollow rotor may have one or more spokes 23 angularly offset to each other by an angle comprised between 70° and 110°, even more optionally comprised between 80° and 100°, for conferring structural rigidity to the hollow rotors 20. The main conveyor 17 may also comprise one or more wings 25 radially emerging from the shaft 18 until at the inner surface of the main channel, configured for moving the material under treatment in contact with the inner surface itself of the main channel 31. The wings 25 allow to mix the organic material under treatment and, bringing it into contact with the inner surface of the channel, make the heat transmission with the main channel 31 more efficient. Referring again to figure 6, the main conveyor 17 comprises a plurality of wings 25 angularly offset to each other, for example by an angle comprised between 70° and 200°, optionally comprised between 80° and 100°. Each wing may have a curved terminal body 25b which contacts the inner surface of the main channel 31, connected to the shaft 18 of the main conveyor 17 by a rod 25a. The terminal body 25b of each wing may be a platelike body lying on a plane transversal to a horizontal plane passing by the shaft 18 and transversal to the rod 25a, conferring to the wing a substantially "T" or "L" profile. As previously mentioned, the helical rotors 19 with one or more coils and the wings 25, cover a central section of the shaft 18 for moving the material under treatment from the inlet 3 towards the outlet 4 of the main channel 31. The main conveyor 17 may be divided in sectors adjacent to each other and having helical rotors 19 or wings 25. In detail, the main conveyor may comprise at least a first and a second sector having respectively helical rotors 19 with one or more coils and a plurality of wings 25, alternated to each other for a preponderant part of the length of the shaft 18, optionally covering at least 70% of the length of the shaft itself. For moving the material under treatment in the treatment chamber 2, the main conveyor 17 may have respective first sectors with solid rotors 24, in proximity of the inlet 3 and of the outlet 4 of the main channel 31. The reactor 1 may also comprise a motor 26 connected to the main conveyor 17 for allowing a movement thereof with respect to the treatment chamber 2 when activated by the control unit 50. The control unit 50 may be connected to the motor and configured for commanding the movement of the main conveyor 17 at a constant angular velocity or as a function of a predetermined speed profile.

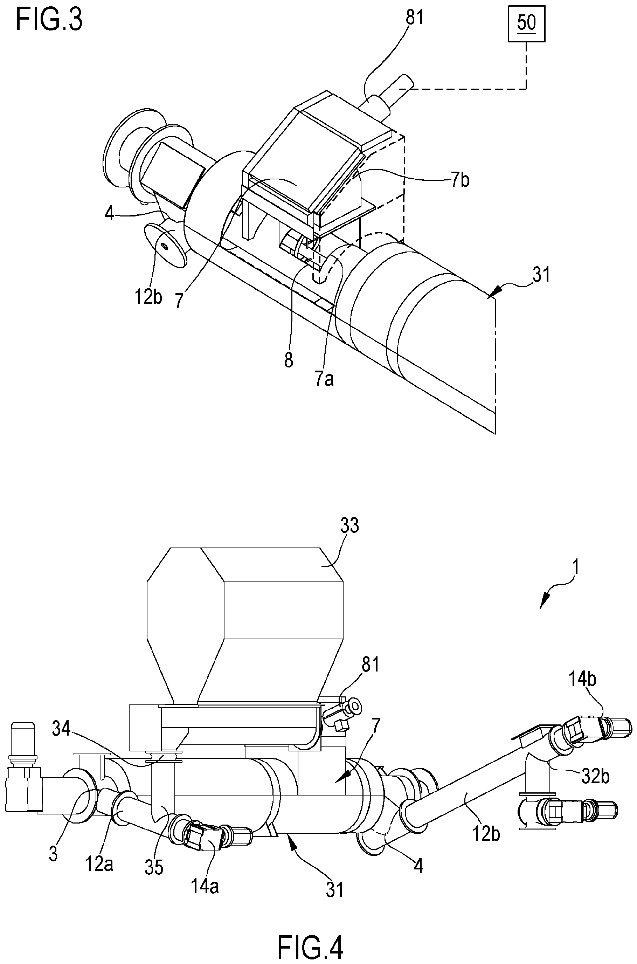

The ejection of the treated organic material in the treatment chamber 2 is made by an unloading conveyor 16 which operates in proximity of the outlet 4 of the main channel 31 (figure 8). Similarly to the loading conveyor 15, also the unloading conveyor 16 may be a screw or auger conveyor which operates inside an unloading channel 12b connected to the radial outlet 31a" of the connection channel 31a for defining, in collaboration with the radial outlet 31a", a single channel suitable for preventing the dispersion of dusts in the environment. The unloading channel 12b is laterally engaged to the connection channel 31a at a first end 16a in communication with the treatment chamber 2. The unloading channel 12b may also have, at a second end 16b opposite to the first end 16a, an outlet mouth 32b configured for unloading the treated organic material withdrawn from the treatment chamber 2 towards a deposit station not shown in the accompanying figures. The unloading channel 12b and consequently the unloading conveyor 16 are sloped with respect to the main channel 31, where the second end 16b of the unloading conveyor 16 is located above the first end 16a of the unloading conveyor 16 itself. In other words, the unloading channel 12b is sloped with respect to a horizontal plane, by an inner angle comprised between 10° and 85°, optionally comprised between 20° and 70°. It is noted that the inclination of the unloading channel 12b determines the movement against gravity of the treated organic material, preventing the lifting of dusts in the treatment chamber 2 of the main channel 31. The reactor 1 may also comprise a motor 14b connected to the unloading conveyor 16 at the second end 16b, for moving the unloading conveyor 16 with respect to the unloading channel 12b. The control unit 50 may be connected to the motor 14b associated to the unloading conveyor 16 and configured for commanding the movement thereof as a function of a predetermined speed profile, optionally at constant speed. As shown in figures 3 and 4, the reactor 1 comprises also a gas outlet opening 8 defined on the main channel 31 for expelling from the main channel 31 the synthetic gases produced during the treatment. The gas outlet opening 8 is located at an upper half of the main channel 31 next to the outlet 4, at a minimum distance Dm from the outlet 4 of the main channel 31 greater than the vertical dimension D1 of the main channel 31. In other words, the gas outlet opening 8 is positioned at a terminal section of the main channel 31 next to the outlet 4, having extension equal to no more than 1/3 of the main channel. From the dimensional point of view, the ratio between the minimum distance Dm and the overall length L of the main channel 31, measured parallel to the longitudinal development direction A of the main conveyor 17, is comprised between 0.1 and 0.3. It is noted that the particular position of the gas outlet opening 8 in a terminal area of the reactor next to the outlet 4 of the main channel 31, allows the ejection of synthetic gases heated by the electric heater 6 having temperature next to 600°C. The gas outlet opening 8 has an elongated shape parallel to the longitudinal development direction A of the main channel 31, having a length smaller than the length L of the main channel 31. In other words, the ratio between the length of the gas outlet opening 8 and the length L of the main channel 31 measured parallel to the longitudinal development direction A of the main conveyor 17 is comprised between 0.1 and 0.5.

The reactor 1 comprises a gas branch manifold 7 suitable for supplying the synthetic gases generated in the main channel towards the burner 60. The specific structure of the gas branch manifold 7 and, subordinately, the positioning thereof with respect to the main channel 31, allow to convey the synthetic gases mixed with reduced quantities or total absence of dust particles. With reference to figures 2 and 3, the gas branch manifold 7 comprises a proximal portion 7a connected to the main channel 31 at the gas outlet opening 8 and a distal portion 7b, spaced from the gas outlet opening, having a gas discharge orifice 10 for channeling the synthetic gas towards the burner 60. It is noted that providing a gas discharge orifice 10 spaced from a gas outlet opening 8 on the main channel 31, limits the lifting against gravity of dusts which tend to precipitate in the main channel 31. In this way it is possible to channel, towards the burner 60 and by means of the connection channel 81, synthetic gases comprising a limited quantity of dusts which could cause clogging and malfunctioning of the burner such that the normal functioning thereof may be impaired. In an embodiment shown in figure 2, the gas branch manifold 7 may have a prismatic or cylindrical tubular conformation, having a constant passage area for all the extension thereof from the proximal portion 7a to the distal one 7b. The gas branch manifold 7 may also comprise an expansion section 7c extending along a direction radially exiting the main channel 31, in interposition between the proximal portion 7a and the distal portion 7b. By means of the expansion section 7c is possible to further limit the lifting of dusts mixed with synthetic gases which lose speed once they reach the expansion section 7c, resulting in the precipitation of dusts towards the main channel 31 and allowing only the synthetic gases to exit the reactor 1 via the gas discharge orifice 10. As for example shown in figure 2, the expansion section 7c extends radially, optionally vertically, from the gas outlet opening 8, positioning the distal portion 7b of the gas branch manifold 7 at a maximum height H from the gas outlet opening 8. From a dimensional point of view, the maximum height H of the gas branch manifold 7 and the vertical dimension D1 of the main channel 31 is comprised between 1.2 and 2.5. The gas discharge orifice 10, located in the distal portion 7b, is in an area of the gas branch manifold 7 at maximum distance from the gas outlet opening 8. Additionally, the gas discharge orifice 10 has a gas passage area smaller than a gas passage area of the gas outlet opening 8 from the main channel. By reducing the cross section of the gas discharge orifice 10 it is possible to increase the ejection speed of the synthetic gases, easing the withdrawal of the gases to be conveyed to the combustion apparatus 60 described in detail below.

### Detailed description of the combustion apparatus 60

Moving on now to describe the apparatus 60 for the combustion of synthetic gases, it comprises, as previously mentioned, a combustion chamber 62 for the combustion of synthetic gases, for example generated in the reactor 1. The combustion chamber 62 receives, by means of the connection channel 81, synthetic gases passing through the gas discharge orifice 10 of the reactor 1, as well as it has an outlet 64 destined to eject exhaust gases in the exhaust gases evacuation line 73.

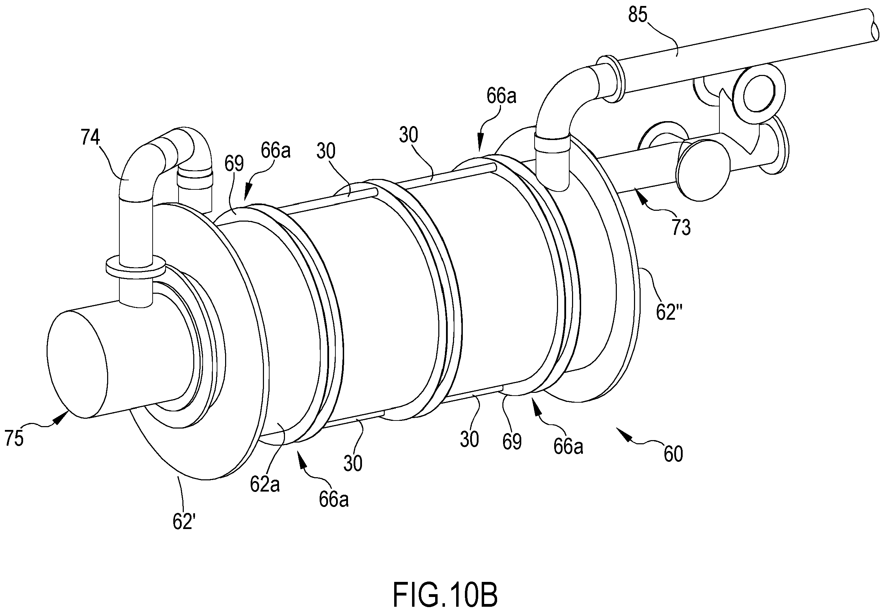

As for example shown in figures 9, 10A and 10B, the combustion chamber 62 has a hollow tubular conformation extending along a development direction X. In the accompanying figures it has been shown a cylindrical combustion chamber 62, however, it is not excluded the realization of a combustion chamber having a prismatic conformation with a polygonal section, for example square or rectangular. The combustion chamber 62 has an inner volume perimetrically delimited by an inner surface, optionally cylindrical, and longitudinally delimited by a first and a second terminal wall 62', 62" of the combustion chamber 62. The combustion chamber 62 also has an outer surface 62a optionally having a cylindrical conformation, in contact with fluid supply circuit 65 described in the following.

The apparatus also comprises a burner 75 for example carried by the first terminal wall 62' or working inside the combustion chamber and responsible for realizing the combustion of the synthetic gases in the combustion chamber 62. In an example, the burner 75 may comprise a combustible access 77 in communication with the connection channel 81 for receiving the synthetic gas from the reactor 1, as well as a comburent access 76 suitable for receiving the comburent gas from the fluid supply circuit 65. The burner 75 may also comprise a mixing chamber 78 where the synthetic gases and the comburent gas are mixed and an activation device 72, for example an electric or spark plug ignition, triggers the combustion of the synthetic gas and with the comburent gas (alternatively the mixing of the two gases may take place directly in the combustion chamber without a different mixing chamber). The burner 75 may also comprise an auxiliary access 88 in communication with the mixing chamber 78 for receiving a combustible gas and allowing an initial ignition of the apparatus as previously detailed.

As mentioned, the apparatus comprises a fluid supply circuit 65 destined to supply a comburent gas, optionally ambient air, to the burner and/or to the combustion chamber 62. The fluid supply circuit 65 (for example a preponderant part thereof) contacts the outer surface 62a of the combustion chamber 62, from an area close to the second terminal wall 62" where it has a gas access 67 for receiving the comburent gas from an outer environment, until an area next to the first terminal wall 62' where it has a gas outlet 68 in communication with the comburent access 76 of the burner 75. The fluid supply circuit 65 may comprise one or more channels 66 placed outside and in contact with the outer surface 62a of the combustion chamber 62 for channeling the comburent gas, optionally air, towards the combustion chamber 62 itself. It is noted that the temperature of the comburent gas entered in the combustion chamber 62, contributes to increase the efficiency of the combustion process of the synthetic gases and furthermore, avoids the generation of undesired condensation and/or the formation of solid particles or dusts in the combustion chamber 62 which may compromise the normal operativity thereof. The positioning of the channels 66 in contact with the outer surface 62a of the combustion chamber 62 allows the heat exchange with the channels 66 of the fluid supply circuit 65, causing the heating of the comburent gas. Additionally, the channels 66 in contact with the outer surface 62a of the combustion chamber 62, define a thermally insulating layer which avoids the need of realizing the combustion chamber 62 itself in ceramic materials or covering the chamber with insulating or refractory materials for allowing the combustion of the synthetic gas at temperatures comprised between 800°C and 1000°C. As further consequence there is the possibility of making the combustion chamber 62 having a more essential structure, for example realizable exclusively in metallic materials, optionally stainless steel, thus leading to a reduction of the costs of realization of the entire apparatus.

It is also noted that the channels 66 of the fluid supply circuit 65 may contact a preponderant part, optionally at least the 70%, of the outer surface 62a of the combustion chamber 62 for increasing the heat exchange surface with the combustion chamber itself. For this purpose, the channels 66 may be arranged transversely to the development direction X of the combustion chamber 62 and formed by successive sections of a single continuous channel extending along a helical trajectory (see figure 10A), or by different annular-shape channels, in fluid communication to each other (figure 10B). Referring again to figures 9, 10A and 10B, the fluid supply circuit 65 may comprise a sleeve 68 which wraps the combustion chamber 62 outside the outer surface 62a of the combustion chamber 62 itself, to form a gap destined to receive the comburent gas and radially delimiting the channels 66. The fluid supply circuit 65 may also comprise one or more walls 69 emerging from the outer surface 62a of the combustion chamber 62 until in proximity of the sleeve 68, for laterally delimiting the channels 66. Furthermore, the walls develop longitudinally for a preponderant part of a, optionally for all the, length of the combustion chamber 62 measured parallel to the development direction X, following a helical trajectory or following respective annular trajectories. According to what has been previously described, the walls 69 may form optionally equidistant successive sections along the development direction X, forming part of a single helical body (figure 10A) or may form respective annular bodies which delimit respective segments 66a of a channel 66 (figure 10B). Preferentially, the comburent gas entered in the fluid supply circuit 65, may be circulated within a single channel 66 laterally delimited by successive sections of a wall 69 itself and radially delimited by the outer surface 62a of the combustion chamber 62 and by the sleeve 68.

The fluid supply circuit 65 may also comprise a connection duct 74 which connects a terminal section of the supply circuit 65 next to the first terminal wall 62', with the burner 75 or with the combustion chamber, for supplying the comburent gas in inlet to the combustion chamber 62.

The apparatus may also comprise a case 70 radially outside the sleeve 68 which defines a further gap between the sleeve 68 and an inner surface 70a of the case itself 70. This gap defined by the case 70 may optionally delimit an air bag having insulating or dissipating functions for the heat emitted by the combustion chamber 62.

Concerning materials, the sleeve 68, the walls 69 and the case 70 are made in metallic material, optionally stainless steel, devoid of coatings made of refractory or thermally insulating materials.

### Process for the treatment of organic material

It is a part of the present invention, a process for the treatment of organic material by means of the plant 100 according to the above description and according to the accompanying aspects and/or the accompanying claims. The process involves a thermochemical treatment of the organic material, optionally in granular or dust form, made by means of the reactor 1, for obtaining a combustible gas, subsequently indicated as synthetic gas, exploited by the apparatus 60 for generating heat and self-heating the reactor itself. The process initially involves supplying organic material in the treatment chamber 2 of the reactor 1, for example performing a step of unloading the organic material on the loading conveyor 15, followed by a step of moving the organic material itself towards the inlet of the treatment chamber 2 of the reactor 1. The process may comprise a step of controlling the speed of movement of the loading conveyor 15 for avoiding the lifting of dusts which could lead to malfunction to the reactor 1.

It is then expected a following step of moving, by means of the main conveyor 17, the organic material from the inlet 3 to the outlet 4 of the main channel 31. Simultaneously to moving the material, the process may also comprise a step of heating, performed by means of the fluid heater 5 and the electric heater 6, at a temperature comprised between 250°C and 800°C, optionally comprised between 280°C and 600°C.

The process also comprises a step of withdrawing the treated organic material from the treatment chamber 2 for being stored. For example, the step of withdrawing involves moving, by means of the unloading conveyor 16, the organic material outside the treatment chamber 2 of the reactor 1, controlling the movement speed of the unloading conveyor 16 itself, for preventing or limiting the lifting of dusts which could mix with the synthetic gas.

The process may then comprise a step of withdrawing, by means of the gas branch manifold 7, the synthetic gas obtained by heating the treatment chamber 2. The step of withdrawing may in turn involve sucking the synthetic gas at a speed comprised between 0.05m/s and 0.8m/s, optionally comprised between 0.1m/s and 0.4m/s and/or a step of adjusting a pressure in the treatment chamber 2 such that this pressure is lower than the pressure of the environment outside the plant, for example such that the absolute inner pressure (assuming to use the plant described herein and claimed on the sea level) is comprised between 101320 Pa and 101000 Pa, optionally comprised between 101305 Pa and 101200 Pa. More generally, the pressure inside the treatment chamber 2 is maintained from 5 to 325 Pa, optionally 20 to 125 Pa, below the environmental pressure.

A step of transporting, by means of the connection channel 81, synthetic gas, from the reactor 1 towards the burner 75 of the apparatus 60 may follow the withdrawal of the synthetic gas from the reactor 1. The process may then comprise a step of channeling, by means of the comburent gas supply line 85, a comburent gas, optionally air, in the fluid supply circuit 65 of the apparatus 60, which, once heated, will be supplied to the combustion chamber 62 and therefore to the burner 75. The progressive advancement of the comburent gas in the fluid supply circuit 65 towards the burner/combustion chamber, involves a gradual heating of the comburent gas itself until a temperature greater than 250°C, optionally comprised between 450°C and 650°C, is reached before being entered in the combustion chamber or supplied to the burner 75. In an example, the process involves channeling the comburent gas according to a helical or annular trajectory along the fluid supply circuit 65, so as to maximize the heat exchange between the combustion chamber 62 and the comburent gas. After supplying of the synthetic gas and of the comburent gas in the mixing chamber 78 of the burner 75 or directly in the combustion chamber, the process may involves triggering the combustion between these gases by means of the activation device 72.

The process may then comprise a step of withdrawing an exhaust gas in the combustion chamber 62 of the apparatus 60 and channeling it in the exhaust gases evacuation line 73 in direction of the heat exchange unit 98 or channeling it in the bypass line 99 if having at a temperature greater than the threshold value of temperature, optionally comprised between 900°C and 1200°C. In order to perform heating of the fluid destined to the fluid heater 5 of the reactor 1, the process may involve conveying, in the hot fluid chamber 98' of the heat exchange unit 98, the exhaust gas leaving the apparatus 60. The process may simultaneously involve supplying the fluid to be heated destined to the fluid heater 5, in one or more cold fluid channels 98" of the heat exchange unit 98. The heat exchange between hot fluid chamber 98' and each cold fluid channel 98", involves heating the heating fluid which, by means of the second branch 108b of the recirculation line 108, is again entered in the fluid supply line of the fluid heater 5 of the reactor 1. The exhaust gas, after having exchanged heat with the heating fluid of the fluid heater 5 of the reactor 1, is ejected into an environment outside of the plant.

The process may also comprise for a step of discharging dusts present in a collection container 102 associated to a respective heat exchange unit 98, performed on the basis of the detection of the weight of the collection container itself by means of the loading cell 103. The process may then comprise a cleaning procedure of each heat exchange unit 98 for removing any clogging of dusts or debris such as to compromise the normal functioning of the heat exchange unit itself. In an example, the cleaning procedure may involve the activation of cleaning nozzles 106 for the emission of water jets in the hot fluid chamber 98' of the heat exchange unit 98 and in the collection container 102.

The process may also comprise a step of filtering the exhaust gas leaving the apparatus 60 and upstream of the heat exchange unit 98, for withdrawing dusts or solid debris mixed in the exhaust gas, which will be then deposited in the collection tank 95. If clogging of the filter 91 is detected, the process may comprise a maintenance procedure which involves discharging dusts from the collection tank 95 if one or more weight values of the collection tank 95 itself are greater than a threshold value of weight.

## Claims

1. Reactor for treatment, for example for pyrolytic treatment, of organic material, said reactor comprising:
- a main channel (31) defining a treatment chamber (2) of the organic material comprising an inlet (3) for receiving organic material to be treated and an outlet (4) in communication with the inlet (3) and destined to unload treated material outside the treatment chamber,
- a main conveyor (17) operating in the treatment chamber (2) and configured for moving the organic material under treatment from the inlet (3) to the outlet (4) along a predetermined treatment path within the main channel (31),
- at least a heater active on the main channel (31),
- a gas branch manifold (7) having:
∘ a proximal portion (7a) connected to the main channel (31) at a gas outlet opening (8) present on the main channel (31) and spaced apart from the inlet (3) and from the outlet (4) of the main channel (31),
∘ a distal portion (7b) spaced apart from the gas outlet opening (8) and having a gas discharge orifice (10).

2. Reactor according to the preceding claim, wherein the inlet (3) and the outlet (4) of the main channel are arranged at opposing ends (31a, 31b) of the main channel itself, and wherein the gas outlet opening (8) is closer to the outlet (4) of the main channel (31) than the inlet (3) of the main channel (31) itself,
wherein the gas outlet opening (8) is positioned at a terminal end of the main channel (31) having extension equal to no more than 1/3 of an overall extension of the main channel itself (31).

3. Reactor according to any one of the preceding claims, wherein the gas branch manifold (7) comprises an expansion section (7c) extending between the proximal portion (7a) and the distal one (7b), optionally in radial direction with respect to a lateral surface of the main channel (31);
and wherein the gas discharge orifice (10) has a gas passage area smaller than a gas passage area of the gas outlet opening (8) of the main channel;
wherein a ratio between the gas passage area of the gas outlet opening (8) of the main channel and the gas passage area of the gas discharge orifice (10) is comprised between 0.01 and 0.06, optionally comprised between 0.02 and 0.05.

4. Reactor according to any one of the preceding claims, wherein the gas outlet opening (8) and the proximal portion of the gas branch manifold (7) are located at an upper half of the main channel (31), and
wherein at least the expansion section of the gas branch manifold (7) extends radially, optionally in vertical direction, from the gas outlet opening (8) positioning the distal portion (7b) of the gas branch manifold (7) at a maximum height (H) from the gas outlet opening (8),
wherein the main channel (31) has a longitudinal development direction (A) and wherein said main channel also has, immediately upstream and/or immediately downstream of said gas outlet opening, a cross section of vertical dimension (D1), measured transversely to the longitudinal development direction (A), smaller than the maximum height (H) of the gas branch manifold (7),
optionally wherein the ratio between the maximum height (H) of the gas branch manifold (7) and the vertical dimension (D1) of the main channel (31) is comprised between 1.2 and 2.5,
wherein the gas branch manifold (7) does not diverge moving away from the gas outlet opening (8) and/or has a constant cross section for the whole extension of the manifold,
optionally wherein the gas branch manifold (7) has a tubular shape, even more optionally prismatic or cylindrical tubular shape,
wherein the gas outlet opening (8) is at a minimum distance (Dm) from the outlet of the main channel (31) having size greater than said vertical dimension (D1) of the main channel (31),
wherein the ratio between said minimum distance (Dm) and a length (L) of the main channel (31), measured parallel to the longitudinal development direction (A) of the main conveyor (17), is comprised between 0.1 and 0.3.

5. Reactor according to any one of the preceding claims, wherein the gas outlet opening (8) has an elongated shape parallel to theta longitudinal development direction (A) of the main channel (31),
wherein the ratio between a length of the gas outlet opening (8) and theta length (L) of the main channel (31) measured parallel to theta longitudinal development direction (A) of the main conveyor (17) is comprised between 0.1 and 0.5.

6. Reactor according to any one of the preceding claims comprising:
- a loading channel (12a) in communication with the inlet (3) of the main channel (31),
- a loading conveyor (15) which operates internally to the loading channel and is configured for moving the organic material towards the inlet (3) of the main channel (31),
wherein the loading channel (12a) is sloped and extends between a first end, at or in immediate proximity of the inlet (3) of the main channel (31), and a second end, located inferiorly to the first end,
wherein the loading channel (12a) is sloped with respect to a horizontal plane by an inner angle comprised between 5° and 60°, optionally comprised between 10° and 45°,
wherein the first end (15a) of the loading channel (12a) is laterally engaged to the main channel (31),
wherein the loading conveyor (15) is a screw or auger conveyor which operates in the loading channel (12a),
wherein the loading channel (12a) comprises a radial inlet mouth (32a) defined in proximity of the second end of the loading channel itself,
wherein the reactor also comprises:
- a hopper (33) for the containment of the organic material to be treated, said hopper (33) comprising an unloading opening (34) for the movement by gravity of the organic material in the loading channel (12a), optionally through the inlet mouth (32a),
- optionally an unloading channel (35) which connects the unloading opening (34) of the hopper (33) with the loading channel (12a), optionally with the inlet mouth (32a) of the loading channel (12a).

7. Reactor according to any one of the preceding claims comprising:
- an unloading channel (12b) in communication with the outlet (4) of the main channel (31),
- an unloading conveyor (16) which operates internally to the unloading channel and is configured for moving the organic material externally to the main channel (31),
wherein the unloading channel (12b) is sloped and extends between a first end at or in immediate proximity of the outlet (4) of the main channel (31), and a second end located upperly to the first end,
wherein the unloading channel (12b) is sloped with respect to a horizontal plane of an inner angle comprised between 5° and 60°, optionally comprised between 10° and 45°,
wherein the first end of the unloading channel (12b) is laterally engaged to the main channel (31),
wherein the unloading conveyor (16) is a screw or auger conveyor which operates in the unloading channel (12b),
wherein the unloading channel (12b) comprises a radial outlet mouth (32b) defined in proximity of the second end of the unloading channel itself,
wherein the reactor also comprises:
- two motors (14a, 14b) respectively connected to the loading conveyor (15) and to the unloading conveyor (16) for allowing a respective movement thereof with respect to the loading channel (12a) and to the unloading channel (12b),
- a control unit connected to said motors (14a, 14b) and configured for commanding the movement of the loading and unloading conveyors (15, 16) thereof as a function of a predetermined speed profile.

8. Reactor according to any one of the preceding claims, wherein the main conveyor (17) has:
- a shaft (18) movable by rotation about an axis parallel to a/the longitudinal development direction (A) of the main channel (31),
- one or more helical rotors (19) radially emerging from the shaft (18) and interconnected to each other to define a coil,
wherein at least one of said one or more helical rotors (19) is a hollow rotor (20) having:
- a perimeter edge (21) extending as a coil around the shaft (18),
- a cavity (22) defining a passage radially interposed between the shaft (18) of the main conveyor and the perimeter edge (21) of the hollow rotor (20),
wherein each hollow rotor (20) has one or more transversal spokes (23) engaging respective sections of the perimeter edge (21) to the shaft (18),
wherein said spokes (23) are angularly offset to each other, optionally by an angle comprised between 70° and 110°, even more optionally comprised between 80° and 100°.

9. Reactor according to claim 8, wherein at least one of said one or more helical rotors (19) is a solid rotor (24) devoid of cavities radially extending from the shaft to an inner surface of the main channel (31),
wherein at least one of said one or more hollow rotors (20) are consecutively joined to a solid rotor (24),
wherein at least a solid rotor (24) of the main conveyor (17), optionally having one or more coils, operates in proximity of the inlet (3) of the treatment chamber (2) and/or wherein at least a solid rotor (24) of the main conveyor (17), optionally having one or more coils, operates in proximity of the outlet (4) of the treatment chamber (2).

10. Reactor according to any one the six preceding claim, wherein the main conveyor (17) comprises one or more wings (25) transversely emerging from the shaft (18) and spaced from the helical rotors (19), configured for terminally contacting an inner surface of the main channel (31),
wherein the wings (25) are spaced apart to each other along the shaft (18), wherein each wing (25) is angularly offset from an adjacent wing by an angle comprised between 70° and 200°,
wherein each wing (25) has:
- a rod (25a) engaged transversely to the shaft (18) of the main conveyor (17),
- a terminal body (25b) engaged to the rod (25a) on the opposite side to the shaft (18),
wherein the terminal body (25b) of the wing (25) has a platelike conformation, wherein the terminal body (25b) has an elongated conformation transversely to the rod (25a) of the wing (25), defining, in cooperation with the rod (25a), a substantially "T" or "L" shape,
wherein the terminal body (25b) of the wing (25) has at least a contact surface sloped with respect to a horizontal plane passing by the shaft (18) of the main conveyor (17).

11. Reactor according to the preceding claim, wherein the main conveyor (17) comprises:
- at least a first sector comprising a plurality of helical rotors (19) interconnected to each other,
- at least a second sector, adjacent to the first sector and comprising a plurality of wings (25),
wherein the shaft (18) of the main conveyor (17) extends in length between the inlet (3) and the outlet (4) of the treatment chamber (2), wherein the main conveyor (17), for a preponderant part of the length of the shaft (18), has a plurality of first sectors interspersed by second sectors,
optionally wherein the first and second sectors cover at least the 70% of the length of the shaft (18),
wherein the main conveyor (17) has respective first sectors in proximity of the inlet (3) and of the outlet (4) of the treatment chamber (2), said first sectors comprising solid rotors and/or hollow rotors (19),
wherein a central section of the main conveyor (17) has one or more first sectors comprising exclusively hollow rotors (19).

12. Reactor according to any one of the preceding claims, comprising:
- a motor (26) connected to the main conveyor (17) for allowing a rotation thereof relative to the treatment chamber (2), and
- a control unit (50) connected with the motor and configured for commanding the movement of the main conveyor (17) as a function of a predetermined speed profile, optionally said control unit (50) being configured for commanding the rotation of the main conveyor (17) at constant angular speed.

13. Reactor according to any one of the preceding claims, wherein the heater comprises:
- a fluid heater (5) active on a first section (2a) of the main channel (31),
- an electrical heater (6) active on a second section (2b) of the main channel (31) interposed between the first section (2a) and the outlet (4) of the main channel (31),
- optionally wherein the first and the second sections (2a, 2b) cover substantially all the longitudinal extension of the main channel (31),
wherein the fluid heater (5) comprises a fluid supply line (5a) active on the first section (2a) of the main channel (31) and configured for being placed in fluid communication with a hot fluid source, the supply line developing around the first section (2a) for transferring heat to the main channel,
wherein the first section (2a) of the treatment chamber (2) extends in length for a preponderant part of the main channel (31) parallel to a/the longitudinal development direction (A) of the main channel (31), wherein said preponderant part covers more than the 50% of an overall extension of the main channel (31);
- a temperature sensor (28) active in the treatment chamber (2) and configured for generating one or more signals representative of a temperature inside the treatment chamber (2),
wherein theta control unit (50) is connected to the temperature sensor (28) and configured for:
- receiving one or more temperature signals generated by said temperature sensor (28),
- determining one or more measured values of temperature as a function of the signals received from the temperature sensor (28),
- comparing each measured values of temperature with a threshold value of temperature, optionally comprised between 280°C and 800°C, even more optionally comprised between 320°C and 680°C,
wherein the control unit (50) is connected to the electrical heater (6) active on the second section (2b) of the treatment chamber (2) and is configured for commanding the electrical heater (6) as a function of said one or more measured values of temperature measured values of temperature, optionally if said measured values of temperature are lower than the threshold value of temperature,
and/or
wherein the heater comprises a pressure sensor (29) active in the treatment chamber (2) and configured for generating a signal representative of a pressure related to the pressure inside the treatment chamber (2); and a/said control unit (50) connected to the pressure sensor (29) and configured for:
∘ receiving one or more pressure signals generated by said pressure sensor (29),
∘ determining one or more measured values of pressure as a function of the signals received from the pressure sensor (29),
verifying if said one or more of the measured values of pressure indicate that the pressure inside the treatment chamber is lower than the environmental pressure, reigning outside the plant, optionally lower by a quantity comprised in a reference range between 10 Pa and 250 Pa, optionally between 20 Pa and 100 Pa.

14. Process of treatment, for example for pyrolytic treatment, of organic material through a reactor according to any one of the preceding claims, said process comprising the steps of:
- supplying organic material inside the treatment chamber (2) of the reactor,
- moving organic material through the main conveyor (17),
- heating the organic material through the heater,
- withdrawing, through the gas branch manifold (7), gas, for example synthetic gas, generated by the heating of the organic material in the treatment chamber (2).

15. Process according to the preceding claim, wherein the step of withdrawing gas from the treatment chamber (2) comprises a step of adjusting a pressure in the treatment chamber (2) sucking gas from the gas branch manifold (7) and/or wherein the pressure inside the treatment chamber is lower than a pressure present in an environment outside the reactor,
wherein the step of adjusting the pressure in the treatment chamber (2) provides for moving gas in the gas branch manifold (7), optionally in the expansion section (7c), optionally at a speed comprised between 0.05m/s and 0.8m/s, optionally comprised between 0.1m/s and 0.4m/s,
and/or
wherein the step of supplying organic material in the treatment chamber (2) comprises the steps of:
- unloading organic material, optionally in granular or dust form, on the loading conveyor (15),
- moving, through theta loading conveyor (15), the organic material at the inlet (3) of the treatment chamber (2), wherein the step of moving organic material comprises a step of controlling a movement speed of the loading conveyor (15) along the operative section,
and/or
wherein the step of heating the organic material comprises a sub-step of adjusting a temperature inside the treatment chamber (2) in a range comprised between 250°C and 800°C, even more optionally comprised between 280°C and 600°C,
wherein said step of heating the organic material is performed simultaneously to the step of moving organic material through the main conveyor (17),
wherein the step of heating the organic material is performed through the fluid heater (5) and the electrical heater (6),
and/or
wherein the process also comprises the steps of:
- withdrawing treated organic material from the treatment chamber (2), and subsequently
- storing treated organic material outside the treatment chamber (2),
wherein the step of withdrawing treated organic material from the treatment chamber (2) comprises a step of moving, through the unloading conveyor (16), the treated organic material outside the treatment chamber (2),
wherein said step of moving treated organic material comprises a step of controlling a movement speed of the unloading conveyor (16) along the operative section.
